# FASCICULE DE BREVET EUROPEEN

(11) **EP 0 419 299 B1**
(45) Date de publication et mention de la délivrance du brevet: **21.09.1994**
(21) Numéro de dépôt: 90402174.8
(22) Date de dépôt: 27.07.1990
(51) Int. Cl.: B65B 41/16, B65B 11/02

(54) **Chariot de dévidement de film pour machine d'emballage**
Wagen zum Abwickeln von einem Film zu einer Verpackungsmaschine
Film unwinding carriage for a packaging machine

(30) Priorité: 06.09.1989 FR 8911638
(43) Date de publication de la demande: 27.03.1991
(73) Titulaire: NEWTEC INTERNATIONAL, F-73106 Aix-les-Bains (FR)
(72) Inventeur: Thimon, Jacques, St Louis MO 63146 (US); Morantz, Jack, Westmount Quebec H32209 (CA)
(74) Mandataire: Orès, Bernard

(56) Documents cités:
- FR-A- 2 281 275
- GB-A- 2 059 906
- US-A- 4 255 918

## Description

On connaît des machines d'emballage d'une charge au moyen d'une bande de film d'emballage déformable, comprenant des moyens supports de la charge ; une bobine de film qui, lorsqu'elle est dévidée permet l'alimentation en film en bande ; des moyens support de la bobine de film ; et des moyens pour opérer un déplacement relatif de la charge (ou de ses moyens support) et de la bobine de film (ou de ses moyens support) en vue d'assurer le recouvrement de la charge avec le film. Le film peut recouvrir toute la charge ou une partie d'entre elle. Il peut être plein ou ajouré comme un filet. L'emballage peut être plus ou moins étanche ou au contraire aéré. La bande peut être d'une laize telle qu'une spire unique suffise à recouvrir la charge ou, au contraire, d'une laize plus petite, l'emballage étant alors généralement hélicoïdal à plusieurs spires. L'emballage peut, dans certains endroits être renforcé. Typiquement l'emballage peut concerner les faces verticales d'une charge palettisée ou encore les faces perpendiculaires à un plan vertical. Les machines d'emballage sont de type à mouvement relatif de la charge linéaire ou/et pivotant. Dans ce dernier cas, soit la charge pivote autour d'un axe vertical, l'axe de la bobine de film restant fixe, la table qui supporte la charge étant montée pivotante, soit l'axe de la bobine de film pivote autour d'un axe vertical autour de la charge, celle-ci étant fixe. Ou, la charge est déplacée horizontalement sur une piste traversant un anneau vertical sur lequel est montée la bobine de film à axe horizontal. Toutes les machines d'emballage de ces types peuvent être manuelles, semi-automatiques ou automatiques. Dans ce dernier cas elles comportent généralement des moyens de coupe transversale du film et des moyens de solidarisation du film sur lui-même ou la charge.

Par exemple, pour déposer une bande de film de façon hélicoïdale sur les faces verticales d'une charge palettisée, on connaît déjà un procédé dans lequel on amène la charge sur une table ; on fait passer le film provenant d'une bobine de film à axe vertical portée par un chariot sur un ou des rouleaux à axes verticaux ; puis, successivement, on solidarise la partie extrême libre initiale du film à la charge ; on entraîne la table, donc la charge, à rotation autour d'un axe vertical ; et on entraîne le chariot vers le haut et vers le bas entre deux positions extrêmes supérieure et inférieure en relation avec la rotation de la table ; une fois le banderolage terminé, on coupe transversalement le film au voisinage de la charge et on solidarise la partie extrême libre terminale du film à la charge ou au film banderolé.

Une machine pour la mise en oeuvre de ce procédé est du type comprenant un bâti fixe ; une table de réception de la charge portée par le bâti, montée à pivotement autour de son axe vertical de manière à pouvoir, sélectivement, être bloquée en rotation ou entraînée en rotation grâce à des moyens d'entraînement et de blocage et des moyens de commande ; un mât vertical, fixe, porté par le bâti, formant support ; des paliers supports d'une bobine de film à axe vertical, portés par un chariot ; des rouleaux portés par le chariot, lequel est monté à coulissement sur le mât en direction verticale vers le haut et vers le bas entre deux positions extrêmes supérieure et inférieure et entraîné à coulissement par des moyens d'entraînement associés à des moyens de commandes associés aux moyens de commande de la table.

L'état de la technique est illustré par certaines machines de la série connue sous le nom "DRA-PAL", commercialisées par les Sociétés du Groupe NEWTEC INTERNATIONAL, ou encore des machines de la Société MULLER MANUFACTURING INC. Elles sont connues de l'homme du métier comme étant des machines de banderolage hélicoïdal vertical d'une charge palettisée à table tournante.

On connaît aussi des machines d'un autre type (documents EP-A-0.177.413, FRA-1.220.712, US-A-4, 109, 445 et US-A-4,587,796 ou machine commercialisée par le Groupe NEWTEC INTERNATIONAL, sous le nom "DRA-PAL OCTOPUS") comprenant un bâti, une table support de la charge palettisée de position fixe lors du banderolage de la charge et à laquelle peuvent être associés des moyens d'amenée et des moyens d'évacuation de la charge tels que des convoyeurs à rouleaux ; un chariot mobile support d'une bobine de film à axe de direction générale verticale ; des moyens mécaniques de support et de guidage du chariot, portés par le bâti, tels que le chariot puisse être déplacé selon un déplacement résultant de la combinaison d'un déplacement en boucle horizontale entourant la charge et d'un coulissement vertical ; et des moyens d'entraînement du chariot aptes à assurer son déplacement effectif, notamment selon un cheminement au moins sensiblement hélicoïdal d'axe vertical entourant la charge. Les moyens mécaniques de support de guidage du chariot peuvent faire l'objet de plusieurs variantes de réalisation : bras tournant (documents EP-A-0.117.413, EP-A-0.220.712 et US-A-4,119,445) ou cadre horizontal, entourant la charge, mobile en direction verticale et le long duquel est déplacé le chariot (document US-A-4,587,796) ou encore équipage mobile le long d'une couronne entourant la charge. Dans une variante possible, la machine n'est pas automatique (document US-A-4,109,445) et dans ce cas, l'accrochage initial de la bande du film sur la charge, la coupe transversale terminale de la bande de film et l'association de la partie extrême terminale de la bande de film à la charge banderolée sont effectués manuellement. Dans une autre variante, ces opérations sont faites automatiquement, la machine de banderolage étant automatique et comportant, à cet effet, portés par des moyens support, des moyens de coupe transversale de la bande de film rendus actifs à la fin du banderolage de la charge ; des moyens de maintien temporaire de la partie extrême initiale de la bande de film provenant de la bobine de film, actifs avant le début du banderolage ; des moyens d'association de la partie extrême terminale de la bande de film à la charge banderolée actifs à la fin du banderolage ; et des moyens de maintien et des moyens d'association (documents EP-A-0.177.413. et US-A-4,587,796).

Avec une machine de ce dernier type, on peut réaliser un banderolage hélicoïdal des faces latérales verticales d'une charge palettisée et à cet effet, on amène et on place une charge à banderoler sur la table support en position fixe ; on maintient la partie extrême initiale de la bande de film provenant de la bobine de film contre une face verticale de la charge, la charge restant toujours fixe, on dévide la bobine de film et on banderole la charge avec la bande de film provenant de la bobine, le débit de film étant déterminé pour être adapté au type de banderolage effectué ; on réalise ainsi au moins une spire de bande de film sur la charge ; on coupe transversalement la bande de film ; on associe la partie extrême terminale de la bande de film à la charge banderolée ; et d'une part on maintient la nouvelle partie extrême initiale de la bande de film, d'autre part on évacue la charge banderolée, de manière à pouvoir recommencer un autre processus de banderolage avec une autre charge.

Selon une mise en oeuvre également connue, on réalise un banderolage hélicoïdal, la bobine de film étant, au début du processus du banderolage, en position extrême inférieure, c'est-à-dire dans sa position relative la plus proche de la table en direction verticale ; puis on déplace la bobine de film selon un mouvement hélicoïdal ascendant autour de la charge et jusqu'à ce que la bande de film recouvre ses faces latérales verticales. Ensuite, on effectue un mouvement hélicoïdal descendant de la bobine de film pour réaliser une seconde couche de bande de film venant recouvrir et se croiser sur la première couche réalisée lors du banderolage hélicoïdal ascendant et ce jusqu'à ce que la bobine de film revienne à sa position initiale en position extrême inférieure.

Préférentiellement et selon la tendance qui a été constatée, on utilise du film étirable présentant aussi la caractéristique d'être plus ou moins autocollant. A cet effet, le film est étiré longitudinalement notamment au-delà de sa limite élastique et, ainsi étiré, est appliqué sur la charge. On connalt à cet effet plusieurs techniques d'étirage longitudinal du film : la technique classique par freinage relatif de la bobine de film par rapport au besoin en film défini par la charge ou la technique plus récente dite du "pré-étirage" dans laquelle le film est étiré indépendamment de la charge et, à cet effet, passe, avant que d'être appliqué sur la charge, d'une zone amont à une certaine vitesse de défilement a une zone aval à une vitesse de défilement supérieure à la précédente. Cette technique du pré-étirage peut être mise en oeuvre avec un dispositif de pré-étirage motorisé ou non motorisé, à deux rouleaux amont et aval ou à un rouleau unique, ainsi que cela résulte des documents FR-A-2.281.275, FR-A-2.468.506, FR-A-470.056 FR-A-2.289.780, FR-A-2.571.655, FR-A-2.571.656, ainsi que de l'existence d'un dispositif de préétirage connu sous le nom de "DYNA-DRAPEUR" commercialisé par les sociétés du Groupe NEWTEC INTERNATIONAL. Les préambules des revendications 1 et 22 sont basés sur l'état de la technique selon FR-A-2 281 275.

La bobine de film et les rouleaux de pré-étirage (dans le cas d'un dispositif de pré-étirage à plusieurs rouleaux) sont généralement portés par un chariot sur lequel ils sont à proximité les uns des autres. Et ce chariot est généralement assez proche de la charge ou des autres organes constitutifs de la machine. Il s'ensuit que l'accessibilité au chariot et aux rouleaux de pré-étirage est le plus souvent rendue ardue. Cela est rendu plus compliqué encore du fait que le dispositif de pré-étirage comporte aussi des rouleaux de renvoi. Cette difficulté d'accessibilité rend la mise en place manuelle du film compliquée et longue. Mais aussi dangeureuse car les rouleaux de pré-étirage pivotent en sens opposés, leur pivotement étant simultané, de sorte que l'opérateur peut se pincer les doigts lors de la mise en place du film. Cette difficulté de mise en place est également fortement aggravée par le fait que le film est de laize importante (par exemple de l'ordre de 40 à 70 cm), fortement déformable et donc sans tenue propre, et, enfin, autocollant dans une certaine mesure. Ce problème est d'autant plus gênant que la tendance à rechercher des degrés d'étirage élevés (de l'ordre de plusieurs fois la limite élastique du film) et la généralisation de ces techniques d'emballage (y compris par exemple pour des charges à bords tranchants) rend la probabilité de rupture du film d'autant plus élevée. Et ce problème affecte finalement les performances de ces techniques d'emballage non seulement parce que la mise en place du film requiert un temps d'arrêt substantiel de la machine mais aussi parce que chaque mise en place conduit à un gaspillage d'une longueur de film non négligeable alors-même que les films eux-mêmes plus "techniques" sont plus coûteux.

Ces problèmes de mise en place du film ont déjà été posés mais n'ont été solutionnés que pour la seule bobine de film (ainsi que cela est prétendu dans le document FR-A-2.573.059). Dans ce document, il est proposé un appareil de dévidage de bobine de film d'emballage ayant un arbre de dévidage adapté pour recevoir la bobine, un système d'entraînement à rouleaux parallèles à l'arbre, des moyens de sollicitation pour appliquer un rouleau moteur du système d'entraînement contre la surface externe de la bobine. L'arbre de dévidage est supporté, à son extrémité supérieure par des paliers et son extrémité inférieure est libre. Cet arbre de dévidage comporte un mécanisme de serrage radial constitué de doigts articulés à l'arbre de dévidage, actionnés par un volant placé en position supérieure. Selon ce document, la mise en place de la bobine avec son système à doigts et volant de commande est combiné à un galet de guidage escamotable solidaire du système d'entraînement et coopérant avec une rampe fixe pour éloigner le système d'entraînement de l'arbre pendant un déplacement vertical d'un support du système d'entraînement. Un changement de bobine comporte donc les étapes successives suivantes : abaissement du support pour amener la bobine au sol ; desserrage du volant ; montée du support et désolidarisation bobine/arbre de dévidage ; mise en place au sol d'une nouvelle bobine ; abaissement du support ; serrage du volant ; montée du support pour appliquer ce système d'entraînement sur la bobine ; descente du support après escamotage du galet. Par conséquent, la mise en place de la bobine reste, avec un tel système, particulièrement complexe et longue et cela d'autant que la structure de l'appareil de dévidage envisagé dans le document FR-A-2.573.059 impose un contact avec pression (ressort) du système d'entraînement à rouleaux sur la bobine de film.

Dans le cas d'un procédé et d'une machine avec préétirage du film au moyen d'un dispositif de pré-étirage, il a été proposé d'utiliser un film de laize originelle L et d'assurer ensuite une réduction de celle-ci pour l'amener à une valeur plus petite l, la bande appliquée sur la charge étant celle à laize réduite. La réduction de laize proposée par l'état de la technique est obtenue par le passage forcé de la bande de film entre deux tiges située dans un plan perpendiculaire à la bande de film et perpendiculaire à la trace de la bande de film sur ce plan. Les deux tiges sont écartées l'une de l'autre de la valeur l, c'est-à-dire la laize réduite. Les deux bords longitudinaux libres de la bande de film en mouvement de défilement plus large que l'écartement des deux tiges viennent interférer mécaniquement avec les deux tiges, ce qui provoque un "roulotté" de ces bords sur eux-mêmes, à la manière d'une corde. La bande de film à laize réduite présente alors une partie centrale sans modification substantielle avec la partie centrale de la bande de laize originelle et, sur ses deux bords longitudinaux deux "roulottés" formant des sortes d'ourlets. Cet état de la technique est bien illustré, notamment, par les documents GB-A-2.069.957, US-A-4.204.377, US-A-4.235.062, US-A-4.325.918.

Il a été constaté que, contrairement aux enseignements de l'état de la technique, il n'était pas toujours souhaitable, voire même il était plutôt désavantageux, de réaliser une bande de film à laize réduite par calibrage du film et constitution de "roulottés" longitudinaux sur ses bords : l'épaisseur de la bande de film varie en effet dans une trop grande mesure, ce qui peut affecter l'emballage ; la laize obtenue n'est pas toujours régulière ; il y a frottement notable de la bande de film sur les tiges. Par ailleurs, la réalisation d'une telle réduction de laize est rendue d'autant plus difficile que le problème de la mise en place du film dans le dispositif de pré-étirage est lui-même complexe, ainsi que cela a été déjà mentionné.

L'invention vise donc à résoudre les problèmes découlant de la mise en oeuvre d'un film d'emballage notamment la mise en place du film.

A cet effet, l'invention propose un procédé de mise en oeuvre d'un chariot de dévidement de film d'emballage comportant un bâti ; un arbre support pour une bobine de film, pour permettre le pivotement de la bobine et le dévidement du film ; un dispositif à rouleaux d'axes parallèles à celui de l'arbre support ; ce chariot étant destiné à être incorporé à une machine d'emballage ; ce procédé comportant :
- Une phase originelle pour associer une bobine à l'arbre support ;
- Une phase subséquente pour mettre en place la bande de film dans le dispositif à rouleaux comportant deux rouleaux principaux amont et aval, définissant entre eux un passage ayant une ouverture d'entrée et une ouverture de sortie, agencés pour pivoter autour de leurs axes dans des sens opposés et deux rouleaux de renvoi amont et aval d'axes parallèles aux axes des rouleaux principaux se trouvant, dans leur localisation opérationnelle, respectivement écartés en amont de l'ouverture d'entrée et en aval de l'ouverture de sortie ;
- Une phase de dévidement du film pour l'emballage de la charge ;
   caractérisé en ce que, dans la phase de mise en place de la bande de film :

. On part d'un état initial dans lequel les rouleaux de renvoi amont et aval sont déplacés relativement de leur localisation finale opérationnelle à une localisation initiale temporaire de mise en place où ils sont respectivement à proximité de l'ouverture d'entrée et de l'ouverture de sortie ;
. Dans une phase initiale d'introduction, on introduit une extrémité initiale du film entre les rouleaux principal et de renvoi amonts et en direction du rouleau principal aval ;
. Dans une phase ultérieure de défilement, on fait pivoter les rouleaux principaux amont et aval autour de leurs axes et on fait défiler une certaine longueur de film dans le sens de son introduction dans le dispositif de manière à ce que le film passe entre les rouleaux principal et de renvoi avals ;
. Et dans une phase finale de mise en place, on amène par un déplacement relatif les rouleaux de renvoi amont et aval de leur localisation initiale à leur localisation finale opérationnelle, ce qui a pour effet de courber le film en l'appliquant sur les rouleaux principaux amont et aval.

L'invention concerne aussi un chariot de dévidement de film d'emballage comportant un bâti ; un arbre support pour une bobine de film porté par le bâti ; un dispositif à rouleaux porté par le bâti d'axes parallèles à celui de l'arbre support ; ce chariot étant destiné à être incorporé à une machine d'emballage ; le dispositif à rouleaux comportant deux rouleaux principaux amont et aval écartés transversalement et d'axes parallèles mais proches l'un de l'autre définissant entre eux un passage pour le film d'emballage, ayant une ouverture d'entrée et une ouverture de sortie , les dits rouleaux principaux étant agencés pour pivoter simultanément autour de leurs axes dans des sens opposés grâce à des moyens d'entrainement ; deux rouleaux de renvoi du film amont et aval associés aux rouleaux principaux amont et aval dont les axes sont parallèles entre eux et aux axes des rouleaux principaux , les dits rouleaux de renvoi se trouvant, dans leur localisation finale opérationnelle, respectivement écartés en amont de l'ouverture d'entrée et en aval de l'ouverture de sortie, caractérisé en ce qu'il comporte, porté par le bâti, des moyens pour le déplacement avec blocage, commandés sélectivement, aptes à permettre un déplacement relatif avec blocage dans l'une des deux positions extrêmes des rouleaux de renvoi par rapport aux axes des rouleaux principaux, les rouleaux de renvoi se trouvant soit dans la localisation finale opérationnelle, soit dans une localisation initiale temporaire de mise en place où ils sont associés aux rouleaux principaux respectivement au plus à proximité de l'ouverture d'entrée et de l'ouverture de sortie.

Les autres caractéristiques de l'invention résulteront de la description qui suivra en référence aux dessins annexés dans lesquels :

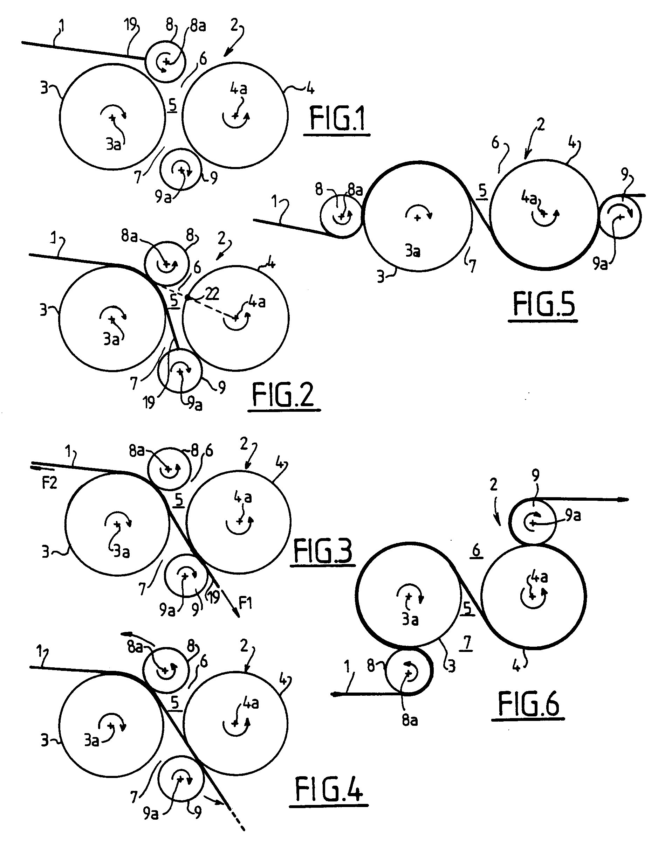

Les figures 1 à 6 sont six vues schématiques d'extrémité axiale, d'un chariot selon l'invention (seuls les rouleaux principaux et les rouleaux de renvoi sont présentés) à plusieurs moments successifs de la phase de mise en place du film, à savoir la figure 1 illustre la localisation initiale temporaire des rouleaux de renvoi et l'amenée initiale du film ; la figure 2 illustre la phase initiale d'introduction du film avec les rouleaux de renvoi dans cette même localisation ; les figures 3 et 4 illustrent la phase de défilement toujours avec les rouleaux de renvoi dans cette même localisation ; la figure 5 illustre une position intermédiaire de la phase finale de mise en place ; et la figure 6 illustre le dispositif opérationnel, les rouleaux de renvoi étant dans leur localisation finale opérationnelle, le film cheminant à travers le dispositif.
La figure 7 est une vue en élévation, partielle, simplifiée, d'un chariot selon l'invention, montrant les moyens de mise en place du film.
La figure 8 est une vue de dessus partielle du chariot de la figure 7 illustrant une variante des moyens aptes à permettre le déplacement des rouleaux de renvoi.
La figure 9 est une vue de dessous, partiellel du chariot de la figure 7 illustrant une variante de moyens aptes à permettre une vitesse différentielle des deux rouleaux de pré-étirage (plus grande en aval qu'en amont).
La figure 10 est une vue schématique, partielle, en élévation, de la partie supérieure du chariot selon la variante de la figure 8 montrant les moyens aptes à permettre le déplacement des rouleaux de renvoi et leur agencement.
La figure 11 est une vue partielle, à plus grande échelle, illustrant le montage et l'agencement, selon une variante possible, d'un rouleau principal et du rouleau de renvoi associé.
La figure 12 est une vue comparable à celle des figures 1 à 6 mais à plus grande échelle, les états d'introduction étant représentés en tiretés et les états opérationnels en traits mixtes, tant en ce qui concerne les rouleaux de renvoi que le film.
La figure 13 est une vue schématique en perspective d'une des variantes possibles d'une machine d'emballage recevant le chariot selon l'invention (machine de type à table tournante autour d'un axe vertical).
Les figures 14 et 15 sont deux vues schématiques, partielles, respectivement en élévation et d'extrémité axiale d'une autre variante des moyens aptes à permettre le déplacement des rouleaux de renvoi (variante à cadre pivotant).
La figure 16 est une autre vue schématique d'extrémité axiale d'une autre variante de ces moyens (variante à couronne tournante).
La figure 17 est une autre vue schématique d'extrémité axiale illustrant une autre variante de ces moyens (variante à biellettes à axe de pivotement décalés).
La figure 18 est une vue partielle, partiellement en élévation, partiellement en coupe, d'un chariot conforme à l'invention, illustrant une variante d'un dispositif de blocage de bobine de film sur l'arbre support.
La figure 19 est une vue schématique partielle à perspective d'un chariot conforme à l'invention, illustrant les moyens de plissage longitudinaux qu'il comporte.
La figure 20 est une vue en élévation du chariot selon la figure 19.
Les figures 21A, 21B, 21C sont trois vues schématiques en coupe transversale d'une bande du film étirable utilisé dans l'invention dans trois états possibles respectivement originellement (lorsque stockée sur ou dévidée de la bobine) après rétrécissement de la laize mais avant étirage et, enfin, après rétrécissement et étirage.
La figure 22 est une vue schématique en élévation d'une variante possible de machine d'emballage comportant un chariot selon l'invention (machine de type à bras tournant).
Les figures 23A, 23B, 23C sont trois vues schématiques, en plan et en élévation d'un tronçon de dévidement d'une bande de film étirable tel que mis en oeuvre dans l'invention avec trois degrés possibles : originellement c'est-à-dire sans rétrécissement de la laize, avec un certain rétrécissement de la laize et, enfin avec un rétrécissement plus important.
Les figures 24A, 24B, 24C représentent chacune quatre vues d'extrémité du tronçon de dévidement des figures 23A, 23B, 23C respectivement dans quatre emplacements différents successifs d'amont en aval à savoir la bobine de stockage de film, les moyens pour restreindre la laize, l'entrée d'un rouleau de pré-étirage amont, et la sortie d'un rouleau de pré-étirage aval.
La figure 25 est une vue partielle, en perspective, illustrant des crochets d'un chariot selon l'invention pour le renforcement longitudinal de la bande du film avant son étirage.

L'invention concerne la mise en oeuvre d'un chariot 14 de dévidement de film d'emballage 1 en bande.

Le chariot 14 comporte un bâti 10 qui supporte les différents organes qui le constituent. Il lui est associé un arbre support 42 pour une bobine de film 15, de manière que la bobine de film puisse pivoter autour de son axe pour le dévidement du film 1.

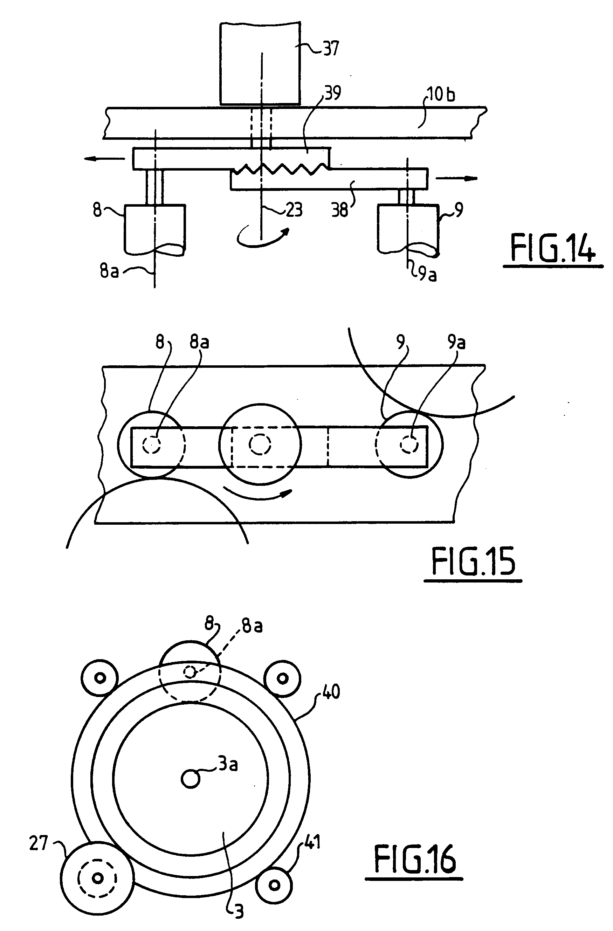

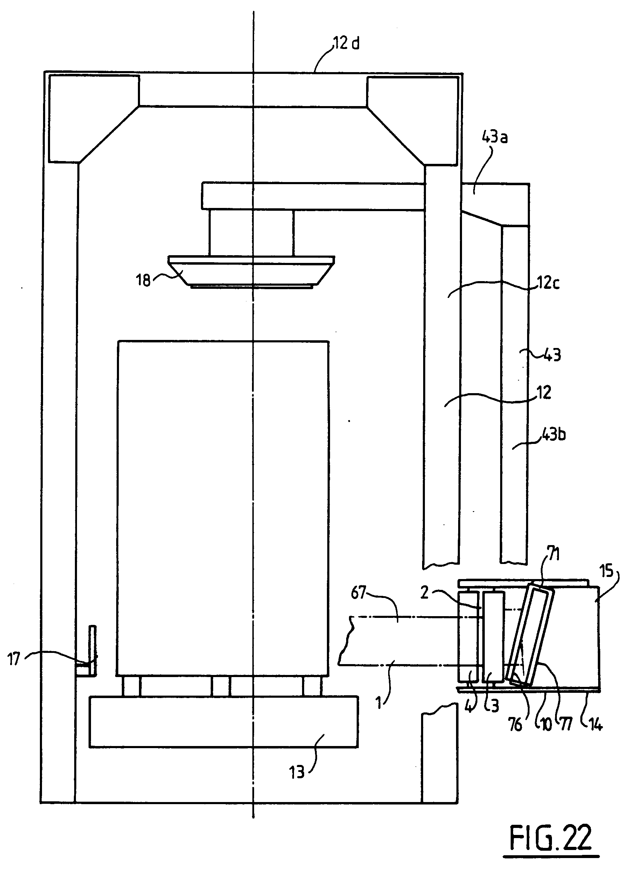

Le chariot 14 est destiné à être incorporé à une machine d'emballage de charge (figures 13 et 22), au moyen du film 1.

Cette machine comporte un bâti 12, des moyens 13 support d'une charge à emballer avec le film 1, le chariot 14 et des moyens 16 pour assurer le déplacement relatif de la charge par rapport au film 1 ou à la bobine 15 de manière à permettre le recouvrement convenable de la charge avec le film 1.

Une telle machine d'emballage peut être notamment de l'un des types suivants : machine rideau machine ; à table tournante ; machine à table fixe et à bobine à axe tournant autour de la charge ; machine à anneau vertical et piste traversant l'anneau.

Dans le cas de la machine rideau (non représentée), l'emballage concerne les faces verticales de la charge telle qu'une charge palettisée. La charge est déplacée le long d'un cheminement horizontal à l'encontre d'un rideau vertical de film s'étendant en direction horizontale transversalement par rapport à la direction de déplacement de la charge. La machine est symétrique par rapport à un plan vertical longitudinal et elle comporte deux bobines de film à axes verticaux fixes. La machine comporte deux chariots tels que 14 supportant les mors de coupe et de solidarisation transversale du rideau du film et, le cas échéant, des dispositifs de pré-étirage dans le cas de la mise en oeuvre d'un film étirable pré-étiré.

Dans le cas d'une machine à table tournante (figure 13), le bâti 12 comporte une soie 12a de support de la table 13 et une colonne 12b verticale décalée portant le chariot 14 lequel supporte la bobine 15, l'arbre 42 étant vertical. Selon une variante possible (non représentée) le chariot 14 est fixe en direction verticale, soit que la bande de film 1 a une largeur égale à la hauteur de la charge à palettiser, soit que l'emballage est un cerclage local. Selon une autre variante possible (cas de figure), le chariot 14 est monté coulissant le long de la colonne 12b vers le haut, le bas, le mouvement de coulissement étant coordonné avec celui de rotation de la table 13 par des moyens d'entraînement 16 tels que moteur ou moto-réducteur. Une telle machine peut comporter des organes complémentaires tels que pinces de maintien du film 1 et mors de coupe et solidarisation 17 ou encore un presseur 18.

Dans le cas d'une machine à table fixe et bobine de film à axe tournant autour de la charge (figure 22), le bâti 12 comporte des montants verticaux 12c placés autour de la table 13, supportant, à leurs parties extrêmes supérieures une superstructure 12d. Ce bâti 12 supporte, de façon appropriée, une bobine de film 15 pouvant tourner autour de la charge. Dans une première variante, le mouvement n'est qu'horizontal (à une ou plusieurs hauteurs ou niveaux). Dans une seconde variante usuel le, le mouvement est hélicoïdal pour assurer un banderolage hélicoïdal des faces latérales de la charge palettisée à emballer. Le chariot 14, est porté par une structure mobile 43 supportant notamment la bobine de film 15 permettant le mouvement de la bobine 15 autour de la charge. Cette structure 43 est par exemple un bras 43a mobile horizontalement, porté par la superstructure 12d au dessus de la charge. A l'extrémité opposée à celle où ce bras est monté à pivotement sur la superstructure 12d se trouve une colonne 43b écartée en direction horizontale des faces verticales de la charge mais placée en regard, le chariot 14 pouvant alors généralement coulisser le long de cette colonne 43b écartée en direction horizontale des faces verticales de la charge mais placée en regard, le chariot 14 pouvant alors généralement coulisser le long de cette colonne 43b (cas de la figure 22). Il peut aussi être prévu des organes tels que pinces, mors, presseurs 17, 18. Selon un autre exemple (non représenté), la structure comporte un premier cadre monté à coulissement vertical comportant des guidages pour une couronne portant rigidement le chariot, le cadre ayant une ouverture telle qu'il peut être placé autour de la charge. Selon un autre exemple (non représenté), la structure comporte une couronne montée à coulissement vertical susceptible de pouvoir entourer la charge, sur laquelle est monté un chariot pouvant être déplacé le long de cette couronne.

Le film 1 peut faire l'objet de variantes : sa laize peut être plus ou moins grande. Il peut être continu, sans perforation ou perforé tel un filet. Il peut être rétractable ou étirable. L'emballage peut recouvrir toutes les faces de la charge ou seulement une partie. L'emballage peut être mono-couche ou multicouche, de façon régulière ou non. Par exemple il peut comporter un banderolage interne dans un sens et un banderolage externe dans le sens opposé, croisé. Plusieurs couches de banderolage peuvent être prévues au voisinage des faces d'extrémité non recouvertes.

Une machine d'emballage peut être automatique ou manuelle. La présence d'un mors ou d'une pince telle que 17 est caractéristique d'une machine automatique qui comporte alors un automate programmé permettant la réalisation de cycles programmés et adaptables selon les types de charge, de film 1, d'emballage à réaliser.

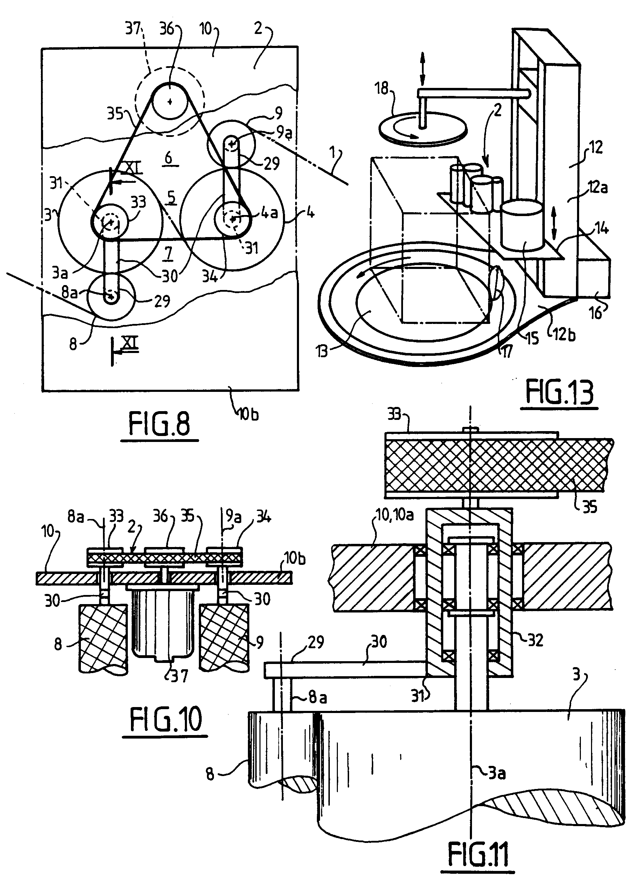

Selon une variante préférentielle de réalisation, non exclusive, on met en oeuvre un film étirable étiré avant application sur la charge au-delà de sa limite élastique. La machine d'emballage comporte alors des moyens aptes à réaliser cet étirage et le procédé d'emballage une étape consistant à étirer longitudinalement le film. L'étirage peut être réalisé selon différentes variantes et en particulier, et préférentiellement, par celle connue dans l'état de la technique sous le nom de "pré-étirage" (document FR-A-2.281.275). Dans ce cas, on fait passer le film 1, dans la localisation du chariot 14, d'une vitesse de défilement amont inférieure à une vitesse de défilement aval supérieure. Puis on transporte le film 1 pré-étiré sur la charge. Dans ce cas, la machine comporte un dispositif de pré-étirage ayant des génératrices aptes à ce que le film soit déplacé de l'entrée à la sortie du dispositif de pré-étirage d'une vitesse amont de défilement à une vitesse aval de défilement plus grande que la vitesse amont. Ce dispositif de pré-étirage est généralement placé sur ou associé fonctionnellement au chariot 14. Toutes les variantes de réalisation de dispositifs de pré-étirage selon l'état connu de la technique peuvent être envisagées. Par exemple, le dispositif de pré-étirage peut être de type non motorisé, l'entraînement étant réalisé par le mouvement du film 1 soi-même. Ou de type motorisé, grâce à un moteur entraînant les génératrices du dispositif de pré-étirage. Il peut être du type comportant au moins un rouleau amont et un rouleau aval agencés pour que la vitesse circonférentielle du rouleau aval soit plus grande que celle du rouleau amont ou du type à au moins un rouleau unique dont les génératrices sont à vitesse circonférentielle plus grande en aval qu'en amont.
on se réfère maintenant plus spécifiquement aux figures 1 à 17 qui concernent la mise en place d'une bande de film d'emballage 1 dans un dispositif à rouleaux 2 comportant d'une part deux rouleaux principaux amont et aval 3, 4 écartés traversalement et d'axes parallèles 3a, 4a parallèles mais proches l'un de l'autre, définissant entre eux un passage 5 pour le film 1 ayant une ouverture d'entrée 6 et une ouverture de sortie 7, les dits rouleaux principaux 3, 4 étant agencés pour pivoter simultanément autour de leurs axes 3a, 4a dans des sens opposés, et, d'autre part, deux rouleaux de renvoi de film amont et aval 8, 9 d'axes parallèles 8a, 9a aux axes 3a, 4a associés aux rouleaux principaux amont et aval 3, 4 se trouvant, dans leur localisation finale opérationnelle respectivement écartés en amont de l'ouverture d'entrée 6 et en aval de l'ouverture de sortie 7, de manière que le film ait, dans le dispositif à rouleaux 2, un cheminement en S allant, d'amont en aval, du rouleau de renvoi amont 8 au rouleau de renvoi aval 9 en passant successivement par un certain secteur du rouleau principal amont 3, l'ouverture d'entrée 6, le passage 5, l'ouverture de sortie 7 et un certain secteur du rouleau aval 4. L'invention concerne aussi le chariot 14 d'une machine d'emballage telle qu'elle a été décrite, comportant un tel dispositif à rouleaux 2, supporté par le bâti 10, les rouleaux principaux 3, 4 étant agencés pour pivoter simultanément autour de leurs axes 3a, 4a dans des sens opposés grâce à des moyens 11 prévus à cet effet.

Par convention, dans le texte, les références amont et aval se réfèrent au sens de défilement normal du film 1. Et on qualifie d'axe pour un rouleau aussi bien la droite immatérielle autour de laquelle pivote le rouleau que l'arbre ou tourillon matériel qui permet ce pivotement.

Le procédé de mise en oeuvre du chariot 14 comportant un tel dispositif 2 ainsi que le chariot 14 selon l'invention sont destinés à être mis en oeuvre dans un procédé ou une machine (plus généralement dispositif ou installation) d'emballage d'une charge au moyen d'un film en matière plastique en bande ainsi qu'elle a été déjà décrite notamment mais non exclusivement du type de celle représentée sur la figure 13.

Le chariot 14 supporte la bobine 15 et à proximité, le dispositif à rouleaux 2, conforme à l'invention, lequel fait préférentiellement fonction de dispositif d'étirage longitudinal du film 2 et, plus spécialement, de pré-étirage.

Pour en revenir à la variante de machine représentée sur la figure 13, le fonctionnement est le suivant : le presseur 18, porté à pivotement libre sur un bras monté sur le mât 12a via un chariot à coulissement vertical est levé. La table 13 étant à l'arrêt, la charge est amenée dessus (au moyen d'un convoyeur non représenté ou d'un chariot transporteur. Le presseur 18 est abaissé sur la face horizontale supérieure de la charge. L'extrémité initiale du film 1 provenant de la bobine est fixée à la pince 17. Les moteurs des moyens 16 sont commandés de sorte que la table 13 est entraînée en rotation tandis que le chariot 14 est entraîné du voisinage de la pince 17 (le plus souvent proche de la table 13) à l'extrémité opposée de la charge (le plus souvent la face horizontale supérieure de la charge). La laize de bande de film 1 est une fraction de la hauteur de la charge. La mise en mouvement provoque le banderolage hélicoïdal de la charge (ses faces verticales). Les mouvements sont poursuivis jusqu'à ce que le chariot 14 revienne à sa position originelle. La pince 17 est agencée pour tenir, couper transversalement la bande de film 1 et appliquer l'extrémité terminale du film 1 sur la charge ou le film 1 en bande déjà appliqué sur la charge. Le presseur 18 peut être alors levé et la charge emballée évacuée de la table 13. Le film 1 provenant de la bobine 15 passe sur les rouleaux du dispositif 2 faisant fonction de pré-étireur. Ainsi qu'on le conçoit et qu'on le voit sur la figure 13, le dispositif 2 est d'accès difficile, étant situé du côté interne du mât 12a (vers la table tournante 13), le cas échéant entre le mât 12a et la charge si la table 13 supporte une telle charge. On conçoit donc l'intérêt d'une mise en place plus automatisée de la bande de film 1 provenant de la bobine 15, à travers le dispositif à rouleaux 2 dans lequel le cheminement du film est tourmenté et complexe (en forme générale de S).

Dans le cas d'un film 1 en matière plastique étirable pré-étiré au moyen de deux rouleaux de pré-étirage il est prévu : un rouleau amont ayant une certaine vitesse périphérique amont et un rouleau aval ayant une vitesse périphérique supérieure. Des rouleaux de renvoi respectivement amont et aval, associés contre les rouleaux de pré-étirage amont et aval, respectivement, avec interposition du film entre eux, assurent que le film 1 est en contact avec les rouleaux de pré-étirage sur un arc circulaire suffisant (par exemple environ 180°). Les rouleaux de pré-étirage ont, préférentiellement, une surface extérieure accrochante pour éviter ou limiter le glissement du film 1 sur eux. De plus, ils sont généralement proches pour limiter la striction du film 1 du fait de son étirage. Actuellement, l'espacement entre les rouleaux de pré-étirage est plus grand que ne le requiert la fonction d'étirage de manière à permettre un accès entre eux pour les doigts de l'opérateur lors de la mise en place du film 1. Les rouleaux de pré-étirage peuvent être de même diamètre ou de diamètres différents. Ils peuvent être motorisés positivement ou entraînés par le film en défilement. Des organes de commande, réglage, asservissement, contrôle peuvent être également prévus. Par ailleurs, l'étirage peut être réalisé en plusieurs étapes et, dans ce cas, il est prévu plusieurs rouleaux de préétirage.

L'invention s'applique préférentiellement dans le cas de l'utilisation de tels dispositifs de pré-étirage. Dans ce cas, le dispositif à rouleaux 2 constitue aussi ou est incorporé au dispositif de pré-étirage. Cela signifie que les rouleaux amont et aval de pré-étirage sont constitués et sont les mêmes que les rouleaux 3, 4 du dispositif 2. Et les rouleaux de renvoi du dispositif de pré-étirage sont constitués et sont les mêmes que les rouleaux 8, 9 du dispositif 2.

Dès lors, toutes les variantes connues ou la portée de l'homme du métier, en ce qui concerne les dispositifs de pré-étirage à deux rouleaux à vitesses différentielles peuvent s'appliquer au dispositif 2. Ou, inversement, le dispositif 2 peut avoir les différentes structures connues ou à la portée de l'homme du métier pour les dispositifs de pré-étirage à deux rouleaux à vitesses différentielles. En conséquence, on ne décrit pas ici en détail la structure du dispositif à rouleaux 2, pas plus que ses différentes variantes ou perfectionnements, dans la mesure où elle est identique et commune avec celle d'un dispositif de pré-étirage à rouleaux à vitesses différentielles connu ou à la portée de l'homme du métier. En revanche, on décrit les spécificités permettant d'adapter un tel dispositif de préétirage pour qu'il représente la structure et les caractéristiques voulues pour constituer un dispositif 2 selon l'invention.

Par ailleurs, il doit être compris que si le dispositif 2 est dérivé d'un dispositif de pré-étirage et remplit cette fonction de pré-étirage, il peut aussi en être indépendant ou distinct. En d'autres termes, il est possible de concevoir que les rouleaux 3, 4 aient la même vitesse périphérique, que le film 1 ne soit pas étiré longitudinalement lors du passage dans le dispositif 2, que le film 1 mis en oeuvre ne soit d'ailleurs pas un film étirable. Par exemple le dispositif 2 peut servir seulement à la mise en place correcte du film 1.

La description qui suit se réfère au cas où le dispositif 2 fait fonction de pré-étireur avec deux rouleaux à vitesses différentielles 3, 4 de mème diamètre.

On se réfère à la figure 6 (ou à la figure 12 en traits mixtes) qui montre , en fonctionnement opérationnel normal, un dispositif de pré-étirage, donc le dispositif 2.

Compte tenu de ce qui a été dit précédemment, le bâti 10 du chariot 14 supportant le dispositif 2 supporte aussi la bobine de film 15. Le film 1 utilisé dans le dispositif 2 selon l'invention provient de la bobine de film 15 préférentiellement placée à proximité du dispositif 2 aux impératifs d'accès et d'encombrement près. Les moyens 11 d'entraînement des rouleaux 3, 4 sont constitués par le film 1 qui est appliqué sur les rouleaux 3, 4 sans glissement et qui, de ce fait, les entraînent en rotation lors de son défilement, par des moyens distincts mécaniques et/ou électriques assurant le couplage des rouleaux 3, 4 entre eux et/ou leur entraînement positif. De plus ces moyens 11 assurent le pivotement des rouleaux 3, 4 à la même vitesse périphérique ou, dans le cas d'un dispositif de pré-étirage, à des vitesses différentielles comme déjà expliqué.

On part d'un état initial dans lequel les rouleaux de renvoi 8, 9 sont déplacés relativement de leur localisation finale opérationnelle à une localisation initiale temporaire de mise en place où ils sont associés aux rouleaux principaux 3, 4 au plus à proximité de l'ouverture d'entrée 6 et de l'ouverture de sortie 7. Dans une phase initiale d'introduction, on introduit une extrémité initiale 19 du film 1 entre les rouleaux principal 3 et de renvoi 8 amont et en direction du rouleau principal aval 4. Dans une phase ultérieure de défilement, on fait pivoter les rouleaux principaux 3, 4 autour de leurs axes 3a, 4a et on fait défiler une certaine longueur de film 1 dans le sens de son introduction dans le dispositif 2. Et dans une phase finale de mise en place, on amène par un déplacement relatif les rouleaux de renvoi 8, 9 de leur localisation initiale temporaire de mise en place à leur localisation finale opérationnelle, ce qui a pour effet de courber le film 1 en l'appliquant sur les dits secteurs de rouleaux principaux 3, 4.

Vu parallèlement aux axes 3a, 4a (plan des figures 1 à 6 et 12) l'espace entre les secteurs des surfaces latérales extérieures 20, 21 des rouleaux 3, 4 écartés mais proches et en regard l'un de l'autre a une forme générale de venturi ou de convergent-divergent. C'est cet écartement qui définit le passage 5. Ce passage est le plus étroit à l'endroit des génératrices les plus proches des surfaces 20, 21 ou encore dans le plan P reliant les axes 3a, 4a. Ce passage 5 est le plus large de part et d'autre du plan P sensiblement dans les plans QE et QS tangeants aux deux surfaces 20, 21 ainsi que cela est bien visible sur la figure 12. L'ouverture d'entrée 6 est du côté et proche du plan QE tandis que l'ouverture de sortie 7 est du côté et proche du plan QS. Une ouverture 6, 7 est qualifiée d'entrée ou sortie, respectivement, selon le sens de rotation des rouleaux 3, 4 ainsi qu'il est représenté par des flèches sur les figures. Pour l'entrée, le sens de rotation des rouleaux 3, 4 est dirigé vers le plan P tandis que pour la sortie le sens de rotation des rouleaux 3, 4 est dirigé dans le sens opposé au plan P.

La localisation initiale temporaire des rouleaux de renvoi 8, 9 est visible sur les figures 1 à 4 et en traits interrompus sur la figure 12. Par exemple, une position typique des rouleaux de renvoi 8, 9 dans cette localisation initiale temporaire est telle qu'ils sont pour partie dans le passage 5 ; c'est-à-dire qu'ils sont sécants avec les plans QE et QS respectivement, ou encore qu'ils sont pour partie en regard, respectivement, des secteurs du rouleau principal 3, 4 auquel ils ne sont pas associés. Par exemple, (figure 12) les rouleaux 8, 9, sont, dans leur localisation initiale temporaire tangents ou sensiblement tangents aux rouleaux 3, 4 à l'endroit ou au voisinage des génératrices de tangence des rouleaux 3, 4 par des plans R et S passant par les axes 4a et 3a respectivement. C'est-à-dire que ces plans R et S passant par les axes 4a, 3a sont aussi sensiblement des plans de tangence de chaque paire de rouleaux amont 3 et 8 et aval 4 et 9.

On entend par le fait que des rouleaux 3, 8 d'une part, 4, 9 d'autre part, sont associés entre eux, le fait qu'ils sont disposés l'un par rapport à l'autre pour pouvoir coopérer ensemble avec le film 1 placé entre. Cette association inclut le fait que les rouleaux sont tangents (à l'épaisseur du film 1 près) ou encore proches l'un de l'autre ou encore appliqués l'un sur l'autre. La notion de tangence s'entend pour les rouleaux considérés par leur enveloppe étant donné que la surface extérieure des rouleaux peut être à relief, telle que gauffrée pour éviter le glissement du film 1.

Pour amener les rouleaux de renvoi 8, 9 de leur localisation finale opérationnelle à leur localisation initiale opérationnelle, on déplace leurs axes 8a, 9a sensiblement à pivotement autour des axes 3a, 4a, respectivement d'une fraction de tour notamment d'un demi tour ou sensiblement d'un demi-tour, notamment d'un peu plus d'un demi-tour et cela dans le sens de la rotation des rouleaux 3 et 4 respectivement.

La phase initiale d'introduction est représentée sur la figure 1. Le film 1, plus précisément son extrémité initiale 19, est amené de l'opposé et vers le rouleau principal 4 sensiblement dans le plan R déjà défini.

La phase ultérieure est représentée sur les figures 2, 3 et 4 dans trois états successifs. Le pivotement du rouleau 3 et l'association avec le rouleau de renvoi 8 ou encore l'entraînement propre du film 1 provoque le défilement du film 1 dont l'extrémité initiale 19 se rapproche puis vient au contact de la surface extérieure 21 du rouleau 4, notamment sensiblement le long ou au voisinage de la génératrice 22 d'intersection du plan R avec la surface extérieure 21 (dite génératrice d' impact). Le mouvement de pivotement du rouleau 4 et la friction entre le film 1 et le rouleau 4 provoquent l'entraînement de l'extrémité 19 vers la partie rétrécie du passage 5 puis de celle-ci vers l'autre rouleau de renvoi 19 placé dans ou au voisinage de l'ouverture de sortie 7 (figure 2). Compte tenu du sens de pivotement des rouleaux 3, 4, 9, le film 1 (à savoir son extrémité 19) est empêché de passer entre les rouleaux 3 et 9 et, au contraire, est sollicité pour passer entre les rouleaux 4 et 9 (figure 3). Le mouvement de défilement du film 1 peut alors être poursuivi, la longueur de film 1 dépassant d'entre les rouleaux 4, 9 étant alors au moins égale à la fraction de circonférence du rouleau 4 sur laquelle le film 1 doit être appliqué en fonctionnement normal (figure 4) ou, plus généralement au moins égale à celle du cheminement du film 1 dans le dispositif 2. A cet effet, pendant la phase ultérieure de défilement, on fait pivoter les rouleaux principaux 3, 4 autour de leurs axes 3a, 4a respectivement d'au moins une fraction de tour.

La phase finale est illustrée par, la figure 5 correspondant à une situation intermédiaire des rouleaux de renvoi, 8, 9 entre la localisation initiale temporaire (figures 1 à 4) et la localisation finale opérationnelle (figure 6). A cet effet, les rouleaux de renvoi 8 et 9 sont déplacés à pivotement autour des axes 3a et 4a dans les sens opposés aux sens de rotation des rouleaux principaux 3 et 4, avec des mouvements égaux et opposés aux mouvements initiaux ayant amené les mêmes rouleaux 8, 9 de leur localisation finale opérationnelle à la localisation initiale temporaire. Lors de ce mouvement des rouleaux de renvoi 8, 9 jusqu'à leur localisation finale opérationnelle, ils maintiennent le film et cela a pour effet d'appliquer progressivement le film sur les secteurs des surfaces extérieures 20 et 21 des rouleaux 3 et 4 compris sensiblement entre les localisations initiales temporaires et les localisations finales opérationnelles.

Les localisations finales opérationnelles des rouleaux de renvoi 8, 9 sont écartées respectivement des ouvertures d'entrée 6 et de sortie 7, de sorte que le film 1 en passant du rouleau 8 au rouleau 4 suit un cheminement en S plus ou moins ouvert ou fermé. Et l'obtention de ce cheminement est rendu possible aisément rapidement et sûrement sans que l'opérateur ait à introduire les doigts dans le passage S. Dans le passage 5, le film 1 suit un chemin sensiblement confondu avec le plan tangent reliant, dans ce passage 5, les rouleaux 3 et 4.

Le dispositif 2 est symétrique par rapport à un axe de symétrie 23 situé dans le passage 5 à l'intersection du plan P et d'un plan T placé entre et à équidistance des rouleaux 3, 4. Dans ce cas, dans la phase finale de mise en place on réalise un déplacement relatif des rouleaux de renvoi 8, 9 et principaux 3, 4 simultanément.

On laisse en permanence les rouleaux de renvoi amont et aval 8, 9 à pivotement libre autour de leurs axes 8a, 9a. Ces rouleaux 8, 9 sont entraînés alors par friction avec le film en défilement. Par ailleurs, pendant la phase de défilement on entraîne positivement à pivotement les rouleaux principaux 3, 4 autour de leurs axes 3a, 4a.

On amène, dans la localisation initiale temporaire de mise en place, les rouleaux de renvoi 8, 9 dans les ouvertures d'entrée et de sortie 6, 7 respectivement . Plus spécialement, les rouleaux 8, 9 sont écartés transversalement des rouleaux principaux 3, 4 d'une distance au moins égale à l'ordre d'épaisseur du film. C'est-à-dire que l'écartement des rouleaux principaux 3, 4 et des rouleaux de renvoi 8, 9 associés est sensiblement égal dans les deux localisations initiale et finale.

Pendant la phase initiale d'introduction on entraîne positivement à pivotement les rouleaux principaux 3, 4. Pendant la même phase de défilement, on saisit l'extrémité initiale 19 du film 1 en aval du passage entre le rouleau principal aval 4 et le rouleau de renvoi aval 9 dès que le rouleau de renvoi aval 9 se trouve dans sa localisation initiale temporaire de mise en place et on le tire, en exerçant sur lui une force de traction, dans le sens de son défilement. Cette force de traction est représentée par la flèche F1 sur la figure 3. Cette traction vise à maîtriser le défilement du film 1. Elle peut être exercée manuellement. Elle est alors sans danger puisque les doigts de l'opérateur vont en s'écartant des rouleaux 9, 4 qui eux-mêmes pivotent à cet endroit dans des sens opposés au pincement de doigts. Inversement et pour donner au film une certaine tension, en tout cas éviter qu'il ne soit lâche, on exerce une certaine tension de retenue du film 1, en amont dans le sens opposé à son défilement. Cette tension de retenue est représentée par la flèche F2 sur la figure 3. Elle peut être exercée automatiquement grâce à un freinage léger par friction exercée sur la bobine de film 15 dont est issu le film 1.

Dans la phase finale de mise en place, on réalise un déplacement relatif des rouleaux de renvoi 8, 9 et des rouleaux principaux 3, 4 en maintenant les rouleaux de renvoi 8, 9 à proximité des rouleaux principaux 3, 4. En variante les rouleaux de renvoi 8, 9 ne sont à proximité des rouleaux principaux 3, 4 que dans les deux localisations d'extrémité initiale et finale mais en sont écartés dans les localisations intermédiaires. Au moins dans la localisation finale opérationnelle, on amène les rouleaux de renvoi 8, 9 substantiellement contre, notamment en appui contre les rouleaux principaux avec interposition entre eux du film 1. Mais généralement, cet appui est réalisé aussi dans la localisation initiale et dans les situations intermédiaires.

Compte tenu qu'il n'est pas nécessaire d'avoir accès au passage 5, il est possible de réduire au strict minimum l'écartement entre les rouleaux 3 et 4 et, en conséquence, on dispose les rouleaux principaux 3, 4 avec un écartement transversal substantiellement égal à la distance minimale permettant le défilement du film 1 entre eux deux. Cette caractéristique constructive est particulièrement importante dans le cas où le dispositif 2 est aussi un pré-étireur parce qu'il permet de réduire la longueur de film 1 dans le passage 5 et donc la striction résultant de l'étirage longitudinal.

Dans la phase finale de mise en place on maintient fixes les axes d'une première paire de rouleaux principaux 3, 4 ou de renvoi 8, 9 et on déplace les axes d'une seconde paire de rouleaux de renvoi 8, 9 ou principaux 3, 4. Dans la variante décrite, on maintient fixes les axes 3a,, 4a des rouleaux principaux 3, 4 et on déplaces les axes 8a, 9a des rouleaux de renvoi 8, 9. L'invention permet aussi que l'on maintienne fixes les axes 8a, 9a des rouleaux de renvoi 8, 9 et on déplace les axes 3a, 4a des rouleaux principaux 3, 4 ou encore, qu'on déplace à la fois les axes 3a, 4a, 8a, 9a de la paire de rouleaux principaux 3, 4 et de la paire de rouleaux de renvoi 8, 9.

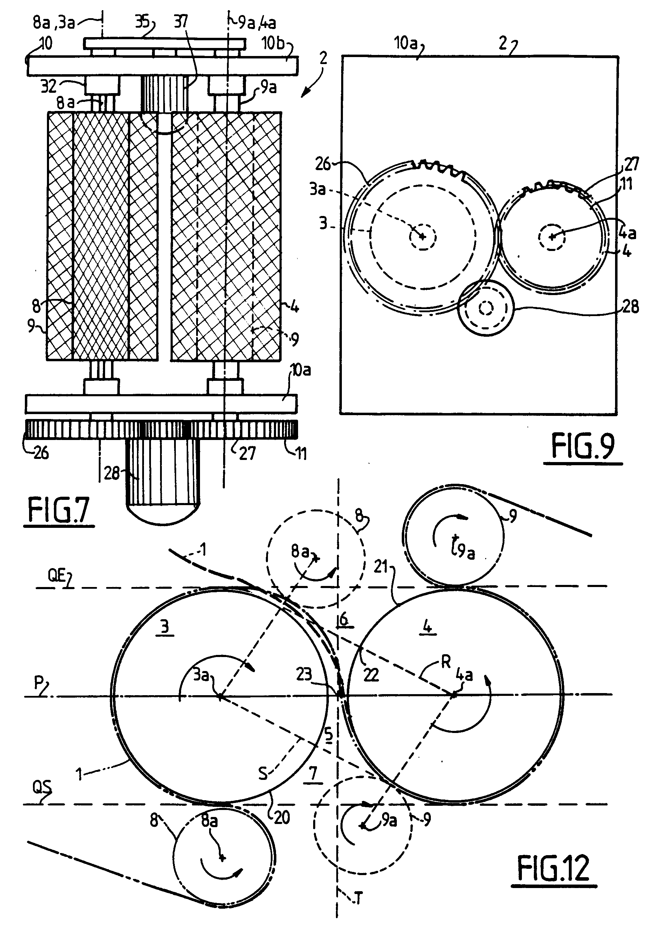

Selon une première variante de réalisation (non représentée) on entra Sne positivement les rouleaux principaux 3, 4 par le mouvement de défilement du film 1 lui-même et on agit sur le film 1 pour l'entraîner positivement directement. Par exemple on tire sur le film 1 en aval, notamment par le médium de la charge à laquelle le film 1 est accroché. Selon une seconde variante (figure 7) plus spécialement adaptée au cas où le dispositif 2 est aussi un pré-étireur motorisé, on entraîne positivement directement les rouleaux principaux 3, 4 et ceux-ci permettent le défilement du film 1. On utilise à cet effet un moteur ou moto-réducteur 24.

Dans le cas où il n'y a pas étirage (ou pré-étirage) longitudinal, soit parce que le dispositif 2 n'est pas destiné à faire fonction de pré-étireur, soit parce qu'il l'est, par destination, mais ne fonctionne pas en tant que tel, notamment temporairement, les vitesses périphériques de pivotement des rouleaux principaux 3, 4 sont identiques. L'invention concerne aussi le cas où les vitesses périphériques de pivotement des rouleaux principaux 3, 4 sont différentes. En particulier le ratio entre les vitesses périphériques des rouleaux principaux 3, 4 est maintenu substantiellement constant, la vitesse périphérique du rouleau principal aval étant plus grande que celle du rouleau amont.

Le film 1 et les rouleaux principaux 3, 4 sont déplacés simultanément sans glissement substantiel relatif dans la direction de défilement du film 1.

Contrairement aux dispositifs qui prévoient, pour la mise en place du film, d'écarter les rouleaux principaux 3, 4, ceux-ci restent à proximité immédiate l'un de l'autre dans tout le processus de mise en place.

Le dispositif 2 qui permet la mise en oeuvre du procédé qui vient d'être décrit fait partie d'un chariot 14 et il est supporté par un bâti 10. Il comporte les deux rouleaux principaux amont et aval 3, 4 d'axes 3a, 4a supportés par le bâti 10 et les deux rouleaux de renvoi amont et aval 8, 9 déjà décrits. Ce dispositif comporte, porté par le bâti 10, des moyens 25 pour le déplacement, avec blocage, aptes à permettre un déplacement relatif avec blocage dans l'une des deux positions extrêmes des rouleaux de renvoi 8, 9 par rapport aux axes 3a, 4a des rouleaux principaux 3, 4. Les rouleaux de renvoi 8, 9 se trouvant soit dans la localisation finale opérationnelle, soit dans une localisation initiale temporaire de mise en place où ils sont associés aux rouleaux principaux amont et aval 3, 4 respectivement au plus à proximité de l'ouverture d'entrée 6 et de l'ouverture de sortie 7, du passage 5.

Dans l'exemple préférentiel, les rouleaux principaux 3, 4 font partie d'un système d'étirage longitudinal du film. Le bâti 10 comporte préférentiellement deux platines parallèles, écartées et en regard 10a, 10b. Le dispositif 2 étant un pré-étireur motorisé, les moyens 11 peuvent comporter, calés sur les axes 3a, 4a, des pignons 26, 27 en prise l'un sur l'autre, entraînés par un moteur 28 porté par l'une des platines soit 10a, par exemple. Ces pignons 26, 27 sont agencés pour permettre le ratio de vitesse souhaité. Par exemple dans le cas de rouleaux 3, 4 de préétirage de même diamètre, le pignon amont 26 est de plus grand diamètre que le pignon aval 27.

Les moyens 25 peuvent faire l'objet de plusieurs variantes de réalisation. Dans une première variante (figures 7, 8, 10, 11) chaque rouleau de renvoi 8, 9 est porté par son axe 8a, 9a aux deux extrémités 29 de deux biellettes 30 parallèles entre elles et aux platines 10a, 10b et orthogonales aux axes 8a, 9a. Ces deux biellettes 30 sont montées à leurs deux autres extrémités opposées 31 à pivotement libre sur les axes 3a, 4a. Les biellettes 30 sont entraînées simultanément préférentiellement pour les deux rouleaux 8, 9. Par exemple les biellettes 30 proches de la platine 10b sont fixées à des manchons 32 montés sur les axes 3a, 4a. Des galets 33, 34 respectivement pour les deux rouleaux 8, 9 sont montés calés sur les manchons 32. Une courroie 35 est en prise et entraîne les deux galets 33, 34. Elle est entraînée à son tour par un galet 36 moteur entraîné par un moteur ou moto-réducteur 37 fixé à la platine 10b. L'ensemble à galets 33, 34, courroie 35, galet 36 peut être remplacé par tout ensemble équivalent à engrenage, poulie, chaîne,... apte à assurer l'interconnexion des biellettes 30 des deux rouleaux 8, 9 via un organe moteur 27, assurant l'entraînement sélectif et le blocage dans les positions souhaitées.

Selon une deuxième variante (figures 14 et 15), les moyens 25 comportent un cadre 38 monté pivotant sensiblement au centre 23 du passage 5 entre les rouleaux principaux 3, 4, le dit cadre 38 supportant à ses deux extrémités opposées 39, 40 les axes 8a, 9a un organe moteur 27 assurant l'entraînement sélectif et le blocage du cadre 38. Préférentiellement, le cadre 38 est agencé réglable en largeur, c'est-à-dire qu'il permet l'écartement ou le rapprochement (avec blocage) des axes 8a, 9a, compte tenu que l'écartement entre l'axe 23 et les axes 8a, 9a, varie entre les deux localisations initiale et finale. Ce réglage est assuré grâce à des moyens de coulissement électriques ou pneumatiques 39.

Selon une troisième variante (figure 16), les moyens 25 comportent deux couronnes ou paires de couronnes 40 supportant fixement et distinctement les axes 8a, 9a, ces couronnes étant portées et guidées par des galets 41, un organe moteur 27 assurant l'entraînement sélectif et le blocage des couronnes 40. A chaque rouleau 8, 9 est associé une ou deux couronnes 40 portées par les galets 41 fixés aux platines 10a, 10b. On peut aussi remplacer des couronnes complètes 40 par des secteurs de couronne. Cette variante a l'avantage de dégager les axes 3a, 4a des rouleaux principaux 3, 4.

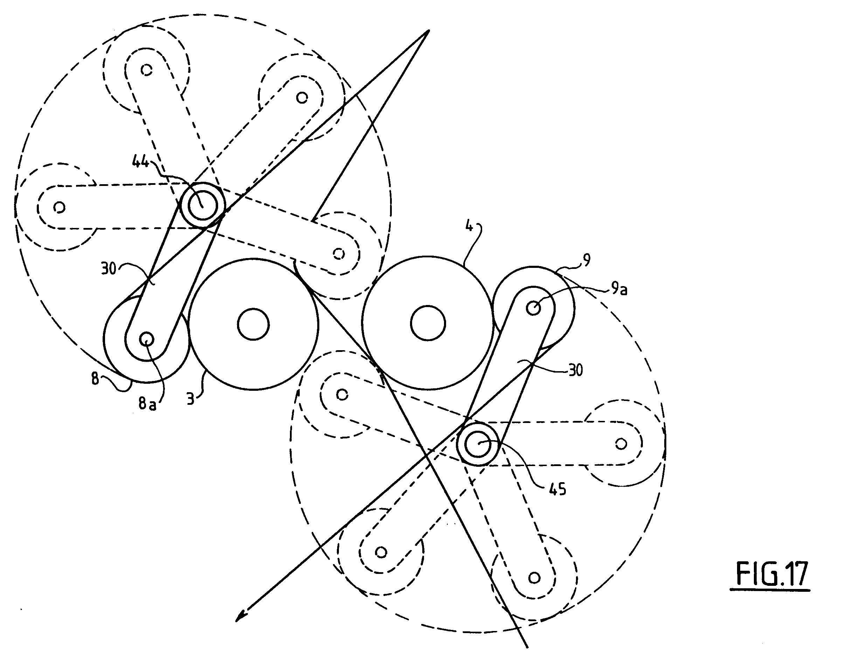

Une quatrième variante (figure 17) est dérivée de la première. Au lieu que les biellettes 30 soient articulées autour des axes 3a, 4a, elles sont articulées autour d'axes 44, 45 situés à leurs extrémités 31, ces axes 44, 45 étant situés à l'écart des rouleaux 3, 4 et chacun sensiblement dans le plan médian des positions extrêmes de l'axe 8a, 9a, respectivement. Il est également prévu, des moyens d'entraînement des biellettes 30 autour de leurs axes 44, 45 tels que poulies, courroie, engrenages, etc. Dans cette variante, les rouleaux 8, 9 (ou leurs axes 8a, 9a) font sensiblement trois quarts de tour de l'une à l'autre de leurs deux positions extrêmes.

Quelle que soit la variante de réalisation, les rouleaux principaux amont et aval 3, 4 sont préférentiellement écartés l'un de l'autre de la distance minimale requise pour le cheminement entre eux du film 1 en vue de son étirage longitudinal.

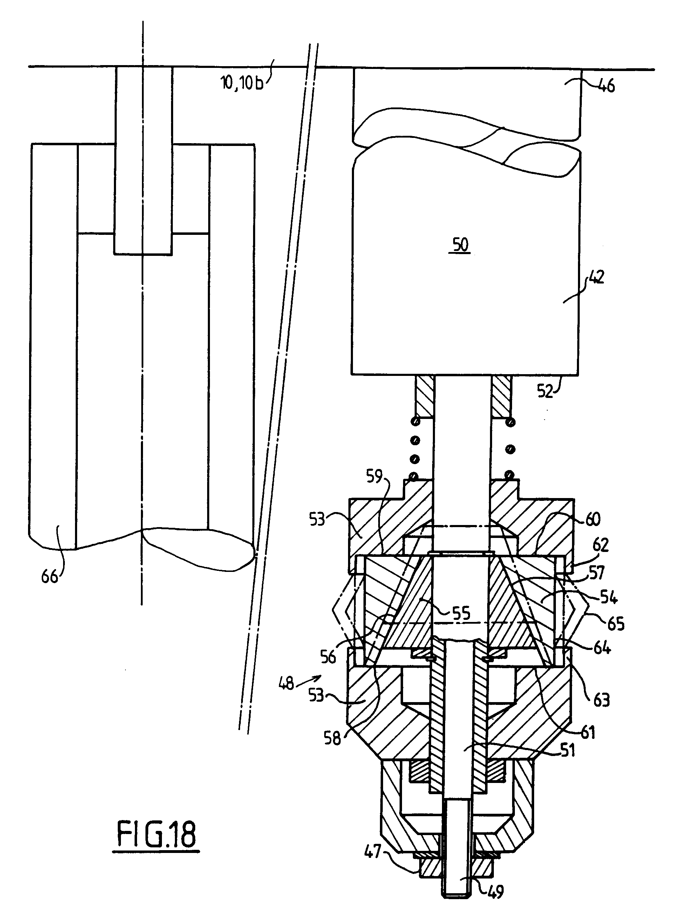

On se réfère maintenant à la figure 18 qui concerne la mise en place de la bobine de film 15 sur le chariot 14, notamment l'arbre support 42.

L'arbre support 42 est maintenu rigidement et perpendiculairement par l'une de ses deux parties extrêmes -à savoir la partie extrême supérieure 46- au bâti 10 -à savoir la platine supérieure 10b-. Le bâti 10 est dépourvu, à l'endroit de l'arbre support 42 et de la bobine 15 de platine inférieure 10a de manière à permettre le montage d'une bobine de film par coulissement axial.

La description se réfère au cas où la bobine est à axe vertical, l'arbre support 42 étant lui aussi vertical et porté par un chariot 14 mobile verticalement, ce qui correspond aux machines telles que celles à table tournante et à bobine tournante.

A sa partie extrème inférieure 47 -opposée à celle 46 où l'arbre support 48 est associé au bâti 10- et libre puisque dépourvue de platine telle que 10a, l'arbre support 42 comporte un dispositif automatique 48 pour le blocage de la bobine de film 15. La partie extrême libre 49 saillante axialement vers le bas à l'opposé de la platine 20b forme commande.

L'arbre support 42 comporte une chemise 50 de guidage rigidement fixée au bâti 10, notamment perpendiculairement ; une tige 51 montée à coulissement axial dans la chemise et saillant de son extrémité 52 opposée au bâti 10 ; des organes de guidage radial 53 associés à la tige 51 ; des organes de blocage 54 montés guidés par et dans les organes de guidage radial 53 de manière à pouvoir êtres déplacés radialement entre deux positions extrêmes respectivement le plus proche de la tige 51 et le plus éloigné, ces deux positions correspondant aux états respectivement inactif et actif du dispositif de blocage 48 ; et un organe d'entraînement 55 associé à la tige 51 et agissant sur les organes de blocage 54 de manière à permettre, par coulissement axial de la tige 51, de réaliser le déplacement radial des organes de blocage 54.

L'organe d'entraînement a une forme générale tronconique avec une surface latérale 56 formant rampe sur laquelle glisse une rampe 55 complémentaire également de forme générale tronconique des organes de blocage 54.

Les organes de blocage 54 peuvent avoir des formes de secteur cylindrique, limité par deux faces transversales 58, 59 perpendiculaires à l'axe de l'arbre 42, glissant sur des surfaces guides complémentaires 60, 61 des deux organes de guidage respectivement inférieur 53a et supérieur 53b, pourvu de retours axiaux 62, 63 dirigés l'un vers l'autre pour empêcher toute désolidarisation intempestive des organes de blocage 54 de leurs guides. Les organes de blocage 54 peuvent comporter sur leur face externe cylindrique 64 des saillies pointues 65 d'accrochage de la bobine de film par son tourillon interne (non représenté).

Sur la figure 18 on a représenté en traits pleins le dispositif 48 à l'état inactif, les saillies pointues 65 étant escamotées entre les saillies 62 et 63 et ne dépassant pas substantiellement de l'enveloppe de la chemise 50 et des organes de guidage radial 53 qui viennent en prolongement. En traits mixtes sont représentés l'organe d'entraînement 55 et l'organe de blocage en position active, les saillies pointues 65 étant alors effectivement en saillies et pouvant accrocher le tourillon interne support de la bobine de film 15.

Il est également prévu, sur le bâti 10, un organe de déverrouillage du dispositif de blocage (non représenté) permettant d'agir sur l'organe d'entraînement 55 pour le ramener à l'état inactif.

On a représenté schématiquement, sur la figure 18, à proximité de l'arbre 42 et du dispositif 48, un rouleau 66 d'axe parallèle, porté par une platine 10b, pouvant être un rouleau d'un dispositif de pré-étirage ou d'un dispositif tel que le dispositif 2 déjà décrit. S'agissant de la phase pour associer la bobine de film 15 à l'arbre support 42, on part d'une situation initiale dans laquelle l'arbre support 42 a son dispositif 48 à l'état inactif, l'arbre 42 étant dépourvu de bobine 15. On place ensuite la bobine de film 15 et l'arbre support 42 de façon au moins sensiblement coaxiale mais écartés l'un de l'autre le long de leur axe commun. On assure un déplacement relatif en direction axiale de l'arbre support 42 et de la bobine de film 15 pour les faire coopérer l'un avec l'autre jusqu'à ce qu'une force convenable exercée axialement sur la partie extrême libre de l'arbre formant commande 49 provoque automatiquement le passage du dispositif automatique de blocage 48 à l'état actif. Et ensuite, on amène le chariot 14 à son emplacement opératoire par un déplacement de coulissement axial unique. Pour le déplacement relatif de l'arbre support 42 et de la bobine de film 15 on garde fixe, en direction axiale, la bobine 15 et on fait coulisser l'arbre support 42 en direction axiale.

Une force est exercée sur la partie extrême libre formant commande 49 du dispositif de blocage 48 par mise en contact de cette partie extrême libre 48 avec une surface d'appui en fin de course de coulissement de l'arbre support 42. Cette surface d'appui peut être une surface de blocage axial de la bobine de film 15 à l'opposé du bâti support de l'arbre support ou une paroi transversale du tourillon support de la bobine de film 15.

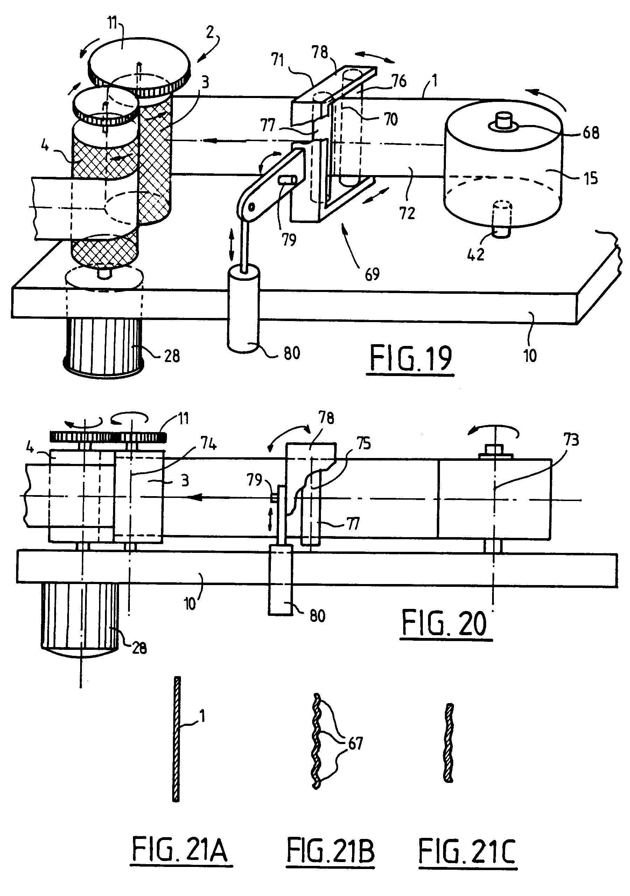

On se réfère maintenant aux figures 19 à 24 qui concernent la réduction de laize du film 1.

Le procédé considéré met ici en oeuvre expressément un film en matière plastique étirable. S'agissant de la phase de dévidement du film 1, en continu et successivement : on assure l'alimentation en film 1 en bande de laize originelle L, par défilement en sens longitudinal, de manière que la bande de film 1 soit substantiellement tendue. On agit sur la bande de film 1 de manière à l'amener à avoir ensuite une laize réduite l plus petite que L. On agit sur la bande de film 1 à laize réduite pour assurer un certain étirage longitudinal. On transporte la bande de film 1 étirée jusqu'à la charge et on l'applique sur la charge pour assurer son emballage.

On agit sur la bande de film 1 de manière à l'amener à avoir une laize réduite en réalisant sur la bande de film 1 des plis 67 substantiellement longitudinaux répartis de façon substantiellement régulière sur toute la largeur de la bande de film 1, les dits plis 67, subissant ensuite, lors de l'étirage longitudinal, un certain laminage.

A cet effet, on met en oeuvre un chariot 14 qui comporte des moyens d'alimentation en film étirable, en bande de laize originelle L comprenant des moyens support 42 d'une bobine de film 15 ; des moyens 68 assurant à la bande de film 1 étirable une certaine tension ; des moyens 69 aptes à restreindre la laize de la bande de film pour l'amener a avoir une laize réduite l inférieure à L ; des moyens 2 aptes à assurer un certain étirage longitudinal de la bande de film 1 à laize réduite, placés en aval des moyens 69 pour restreindre la laize et comprenant au moins un rouleau d'étirage d'axe parallèle à celui de la bobine de film 15 ; des moyens aptes à assurer le déplacement longitudinal de la bande de film. Les moyens 69 aptes à restreindre la laize de la bande de film 1 sont constitués par une fente 70 d'un organe de plissage 71 sur lequel glisse la bande de film 1, la direction longitudinale de la fente 70 étant inclinée, avec un angle aigu par rapport à l'axe de la bobine de film et à l'axe du rouleau d'étirage.

Sur la figure 22 on a représenté l'invention, relative au plissage, mise en oeuvre sur la machine de type à table fixe et bobine tournant autour de la charge.

On réalise sur la bande 1 de nombreux plis substantiellement longitudinaux et adjacents entre eux constituant un fronçage de la bande de film 1 de direction substantiellement transversale. On étire la bande de film 1 au-delà de sa limite élastique. Et, plus particulièrement, on étire la bande de film 1 nettement au-delà de sa limite élastique. Eventuelllement, on réalise au moins sensiblement simultanément avec l'étirage longitudinal du film 1 un certain étirage transversal. Préférentiellement on étire la bande de film 1 aussitôt ou un très court moment après avoir diminué la laize. Ou, encore, on laisse une longueur de bande de film 1 minimale ou très courte entre l'endroit de l'alimentation à laize originelle L et l'endroit de l'étirage. Pour assurer l'alimentation en film 1 en bande de laize originelle L, on dévide une bande de film d'une bobine de film 15 ; et pour assurer un certain étirage longitudinal de la bande de film 1, on la fait défiler d'une zone amont à une première vitesse de défilement amont à une zone aval à une seconde vitesse de défilement aval supérieure à la première vitesse de défilement amont. La mise en place de la bobine de film 15 est facilitée par la mise en oeuvre de la technique précédemment décrite. Le pré-étirage du film peut être réalisé au moyen du dispositif à deux rouleaux de vitesses différentielles tel que déjà mentionné.

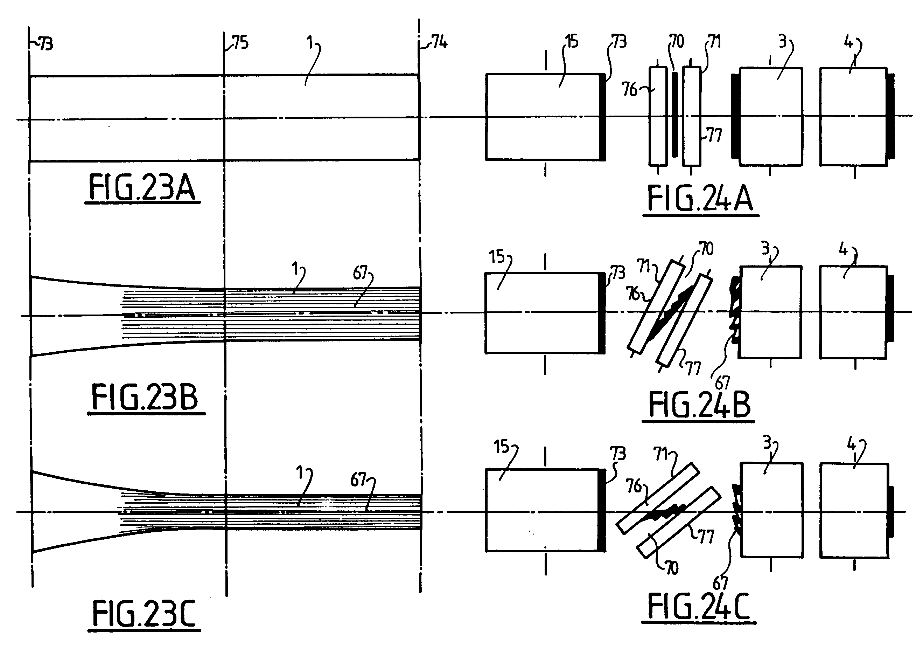

Pour agir sur la bande de film 1 de manière à avoir des plis 67 substantiellement longitudinaux répartis de façon substantiellement régulière sur toute la largeur de la bande, on assure -dans une zone transversale d'un tronçon de défilement 72 défini par deux traces de référence, amont 73 et aval 74, respectivement, de la bande 1 parallèles entre elles et transversales par rapport à la bande 1- un guidage forcé et localisé de la bande 1 en défilement selon une trace intermédiaire de déformation 75, laquelle trace 75 est substantiellement orthogonale à la direction longitudinale de la bande 1 et inclinée avec un angle aigu par rapport aux traces de références 73, 74 de manière que la bande 1 en défilement subisse, de la trace de référence amont 78 à la trace intermédiaire 75 une première torsion d'une fraction de tour et de la trace intermédiaire 75 à la trace aval 74 une seconde torsion opposée à la première torsion, la bande 1 étant sollicitée, lors de son guidage forcé, à se contracter dans sa direction transversale en se plissant. Pour assurer un guidage forcé de la bande 1 selon une trace intermédiaire 75, on fait passer la bande 1, en défilement, dans une fente 70 dont la direction longitudinale correspond au moins sensiblement à ou détermine la trace intermédiaire. Pour assurer à la bande 1 un état substantiellement tendu, on restreint légèrement la bobine de film 15. On fait passer la bande 1 entre la bobine de film 15 et un rouleau d'un dispositif d'étirage 2, d'axes parallèles entre eux définissant les traces de référence amont 73 et aval 74 respectivement à travers une fente 70 d'un organe de plissage 71, la direction longitudinale de la fente étant inclinée, avec un angle aigu par rapport aux axes de la bobine de film 15 et du rouleau du dispositif d'étirage 2. On assure le glissement de la bande de film 1 sur l'organe de plissage 71. En particulier et préférentiellement avec un frottement minimal. On règle la laize réduite 1 par rapport à la laize originelle L en réglant l'angle d'inclinaison de la trace intermédiaire 75 par rapport aux traces de référence amont 73 et aval 74, toutes closes égales par ailleurs, la laize réduite l étant d'autant plus petite que l'angle d'inclinaison est plus grand. On peut à cet égard se référer aux figures 23A, 23B, 23C, 24A, 24B, 24C. Dans le cas des figures 23A et 24 A, la fente 70 n'est pas inclinée et il n'y a pas de plissage. Dans le cas des figures 23B et 24B, la fente 70 est inclinée d'environ 30° sur la verticale et il n y a un certain plissage qui, cependant, est plus faible que celui obtenu dans le cas des figures 23C et 24C où la fente est inclinée d'environ 60° sur la verticale.

Pour des applications usuel les l'angle d'inclinaison de la trace intermédiaire 75 par rapport aux traces de référence amont 73 et aval 74 est compris entre 30° et 60°.

Selon une variante possible, on emballe la charge avec le film 1 en réglant la laize réduite à une valeur constante.

Selon une autre variante on emballe la charge en modifiant la laize réduite selon les zones de la charge à emballer.

Par ailleurs, préférentiellement ou éventuellement, on règle le degré d'étirage en fonction de la valeur de la laize notamment on augmente le degré d'étirage lorqu'on diminue la laize.

L'organe de plissage 71 est constitué par deux tiges ou rouleaux fixes 76, 77 parallèles et écartés transversalement l'un de l'autre, espacés pour constituer la fente 70, portés par un cadre support ou équivalent 78. Ces tiges ou rouleaux 76, 77 sont à surface métallique ou polie apte à permettre un glissement du film 1 avec frottement minimal de la bande de film. Préférentiellement, les tiges ou rouleaux 76, 77 sont assez proches de manière que l'inclinaison de la fente 70 corresponde assez précisément à celle de la trace 75, de manière à bien contrôler le degré de plissage. une platine commune faisant partie du bâti 10 supporte l'arbre support 42 de la bobine de film 15, les moyens d'étirage 2 et le cadre support 78. Le cadre support 78 est porté de façon pivotante mais blocable sur la platine autour d'un axe 79 orthogonal à la fente 70. Un organe d'entraînement avec blocage 80 tel qu'un vérin pneumatique agit sur le cadre support 78 pour le placer dans une certaine position donnée par rapport à l'axe 79a qui détermine l'inclinaison de la fente 70.

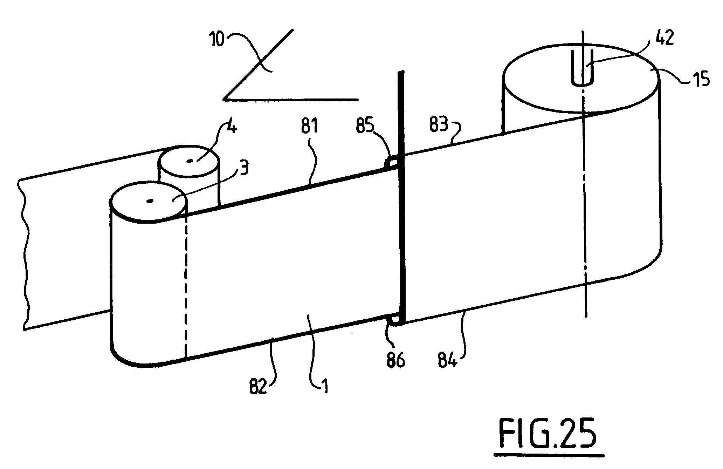

On se réfère maintenant à la figure 25 qui illustre la sécurité au déchirement du film 1. En effet, la mise en oeuvre du film étirable, pré-étiré et fortement étiré, au-delà de sa limite élastique, mince, en vue de réaliser des plis tels que 67 risque de provoquer le déchirement du film 1. A cet effet on réalise, s'agissant de la phase de dévidement, sur la bande de film 1, au moins deux plis longitudinaux 81, 82 sur les deux bords longitudinaux 83, 84 de la bande de film 1 en vue d'éviter son déchirement. Les plis 81, 82 sont simples ou multiples. En principe un pli simple est suffisant, le bord libre longitudinal de la bande de film n'étant plus constitué par le bord libre , donc déchirable, du film lui-même. Le chariot 14 est alors pourvu de deux crochets 85, 86 ou équivalent situés en amont d'un dispositif à rouleau de pré-étirage 2, situés dans un plan transversal par rapport à celui de la bande de film 1, sur lesquels glissent les bords longitudinaux 83, 84 de la bande de film 1 de manière à réaliser sur ceux-ci deux plis longitudinaux 81, 82 en vue d'éviter le déchirement de la bande de film 1.

Ces crochets 85, 86 sont également placés de préférence au voisinage immédiat et en sortie de la bande de film 1, en amont de l'organe de plissage 71. Contrairement à l'organe de plissage 71 qui réduit substantiellement la laize du film 1, tel n'est pas le cas des crochets 85, 86 qui ne font que réaliser les plis 81, 82 souhaitables. Les crochets 85, 86 peuvent être portés par une potence 87 fixée au bâti 10. Sur la figure 25 on n'a pas représenté, pour des raisons de simplification, les moyens de plissage et ceux pour la mise en place du film 1 entre les rouleaux de pré-étirage 3, 4.

## Revendications

1. Procédé de mise en oeuvre d'un chariot de dévidement de film d'emballage comportant un bâti ; un arbre support pour une bobine de film, pour permettre le pivotement de la bobine et le dévidement du film ; un dispositif à rouleaux d'axes parallèles à celui de l'arbre support ; ce chariot étant destiné à être incorporé à une machine d'emballage ; ce procédé comportant :
- Une phase originelle pour associer une bobine à l'arbre support ;
- Une phase subséquente pour mettre en place la bande de film dans le dispositif à rouleaux (2) comportant deux rouleaux principaux amont et aval (3,4), définissant entre eux un passage (5) ayant une ouverture d'entrée (6) et une ouverture de sortie (7), agencés pour pivoter autour de leurs axes (3a, 4a)dans des sens opposés et deux rouleaux de renvoi amont et aval (8, 9) d'axes (8a, 9a) parallèles aux axes (3a, 4a) des rouleaux principaux se trouvant dans leur localisation opérationnelle respectivement écartés en amont de l'ouverture d'entrée (6) et en aval de l'ouverture de sortie (7) ;
- Une phase de dévidement du film pour l'emballage de la charge,
caractérisé en ce que dans la phase de mise en place de la bande de film :
. On part d'un état initial dans lequel les rouleaux de renvoi amont et aval (8, 9) sont déplacés relativement de leur localisation finale opérationnelle à une localisation initiale temporaire de mise en place où ils sont respectivement à proximité de l'ouverture d'entrée (6) et de l'ouverture de sortie (7) ;
. Dans une phase initiale d'introduction, on introduit une extrémité initiale (19) du film (1) entre les rouleaux principal (3) et de renvoi (8) amonts et en direction du rouleau principal aval (4) ;
. Dans une phase ultérieure de défilement, on fait pivoter les rouleaux principaux amont et aval (3, 4) autour de leurs axes (3a, 4a) et on fait défiler une certaine longueur de film (1) dans le sens de son introduction dans le dispositif (2) de manière à ce que le film passe entre les rouleaux principal et de renvoi avals ;
. Et dans une phase finale de mise en place, on amène par un déplacement relatif les rouleaux de renvoi amont et aval (8, 9) de leur localisation initiale à leur localisation finale opérationnelle, ce qui a pour effet de courber le film (1) en l'appliquant sur les rouleaux principaux amont et aval (3, 4).

2. Procédé selon la revendication 1, caractérisé en ce qu'on laisse en permanence les rouleaux de renvoi (8, 9) à pivotement libre autour de leurs axes (8a, 9a).

3. Procédé selon la revendication 1 caractérisé en ce que pendant la phase de défilement on entraîne positivement à pivotement les rouleaux principaux (3, 4) autour de leurs axes (3a, 4a).

4. Procédé selon la revendication 1 caractérisé en ce qu'on amène, dans la localisation initiale les rouleaux de renvoi (8, 9) dans les ouvertures d'entrée et de sortie (6, 7).

5. Procédé selon la revendication 1 caractérisé en ce qu'on amène, dans la localisation initiale les rouleaux de renvoi (8, 9) écartés transversalement des rouleaux principaux (3, 4) d'une distancede l'ordre de l'épaisseur du film (1).

6. Procédé selon la revendication 1 caractérisé en ce que pendant la phase d'introduction on entraîne positivement à pivotement les rouleaux principaux (3, 4).

7. Procédé selon la revendication 1 caractérisé en ce que pendant la phase de défilement on fait défiler une longueur de film (1) au moins égale à celle du cheminement du film dans le dispositif à rouleaux (2).

8. Procédé selon la revendication 1 caractérisé en ce que pendant la phase de défilement, on fait pivoter les rouleaux principaux (3, 4) autour de leurs axes (3a, 4a) d'au moins environ un tour.

9. Procédé selon la revendication 1 caractérisé en ce qu'on saisit l'extrémité initiale (19) du film (1) en aval du passage entre le rouleau principal aval (4) et le rouleau de renvoi aval (9) dès que le rouleau de renvoi aval (9) se trouve dans sa localisation initiale et on le tire, en exerçant sur lui une force de traction, dans le sens de son défilement.

10. Procédé selon la revendication 1 caractérisé en ce qu'on exerce une certaine tension de retenue du film (1), en amont, dans le sens opposé à son défilement.

11. Procédé selon la revendication 1 caractérisé en ce que dans la phase de mise en place on réalise un déplacement relatif des rouleaux de renvoi (8, 9) et principaux amont et aval (3, 4) simultanément.

12. Procédé selon la revendication 1 caractérisé en ce que dans la phase de mise en place on réalise un déplacement relatif des rouleaux de renvoi amont et aval (8, 9) et des rouleaux principaux amont et aval (3, 4) en maintenant les rouleaux de renvoi (8, 9) à proximité des rouleaux principaux amont et aval (3, 4) réciproquement.

13. Procédé selon la revendication 1 caractérisé en ce que dans la localisation opérationnelle, on amène les rouleaux de renvoi amont et aval (8, 9) substantiellement contre les rouleaux principaux amont et aval (3, 4) avec interposition entre eux du film (1).

14. Procédé selon la revendication 1 caractérisé en ce qu'on dispose les rouleaux principaux amont et aval (3, 4) avec un écartement transversal substantiellement égal à la distance minimale permettant le défilement du film (1) entre deux.

15. Procédé selon la revendication 1 caractérisé en ce que dans la phase de mise en place on maintient fixes les axes (3a, 4a) des rouleaux principaux (3, 4) et on déplace les axes (8a, 9a) des rouleaux de renvoi (8, 9).

16. Procédé selon la revendication 1 caractérisé en ce que dans la phase de mise en place on maintient fixes les axes (8a, 9a) des rouleaux de renvoi (8, 9) et on déplace les axes (3a, 4a) des rouleaux principaux (3, 4).

17. Procédé selon la revendication 1 caractérisé en ce que dans la phase de mise en place on déplace à la fois les axes (3a, 4a, 8a, 9a) des rouleaux principaux (3, 4) et des rouleaux de renvoi (8, 9).

18. Procédé selon la revendication 1 caractérisé en ce qu'on entraîne positivement les rouleaux principaux (3, 4) par le mouvement de défilement du film (1) lui-même et on agit sur le film (1) pour l'entraîner directement positivement.

19. Procédé selon la revendication 1 caractérisé en ce qu'on entraîne positivement directement les rouleaux principaux (3, 4) et ceux-ci permettent le défilement du film (1).

20. Procédé selon la revendication 1 caractérisé en ce que la vitesse périphérique du rouleau aval (4) est plus grande que celle du rouleau principal amont (3), la paire de rouleaux principaux (3, 4) faisant fonction de moyen d'étirage du film (1) lors de son défilement.

21. Procédé selon la revendication 1 caractérisé en ce que dans la phase pour associer une bobine de film (15) à l'arbre support (42) : on part d'une situation initiale dans laquelle l'arbre support pourvu à sa partie extrême libre d'un dispositif automatique de blocage (48) d'une bobine (15) à l'état inactif est libre et dépourvu de bobine (15) ; on place ensuite la bobine (15) à associer à l'arbre support (42) et l'arbre support (42) de façon généralement coaxiale mais écartés l'un de l'autre le long de leur axe commun ; on assure un déplacement relatif en direction axiale de l'arbre support (42) et de la bobine de film (15) pour les faire coopérer l'un avec l'autre jusqu'à ce qu'une force convenable exercée axialement sur la partie extrême libre de l'arbre formant commande (49) du dispositif de blocage (48) provoque le passage du dispositif de blocage (48) à l'état actif ; et ensuite on amène le chariot à son emplacement opératoire par un déplacement de coulissement axial unique.

22. Chariot de dévidement de film d'emballage comportant un bâti ; un arbre support (42) pour une bobine de film porté par le bâti ; un dispositif à rouleaux porté par le bâti d'axes parallèles à celui de l'arbre support : ce chariot étant destiné à être incorporé à une machine d'emballage ; le dispositif à rouleaux comportant deux rouleaux principaux amont et aval (3, 4) écartés transversalement et d'axes (3a, 4a) parallèles mais proches l'un de l'autre définissant entre eux un passage (5) pour le film d'emballage (1), ayant une ouverture d'entrée (6) et une ouverture de sortie (7), les dits rouleaux principaux (3, 4) étant agencés pour pivoter simultanément autour de leurs axes (3a, 4a) dans des sens opposés grâce a des moyens (11) d'entrainement ; deux rouleaux de renvoi du film (1) amont et aval (8, 9) associés aux rouleaux principaux amont et aval (3, 4) dont les axes (8a, 9a) sont parallèles entre eux et aux axes (3a, 4a) des rouleaux principaux, les dits rouleaux de renvoi (8, 9) se trouvant, dans leur localisation finale opérationnelle, respectivement écartés en amont de l'ouverture d'entrée (6) et en aval de l'ouverture de sortie (7), caractérisé en ce qu'il comporte, porté par le bâti (10), des moyens (25) pour le déplacement avec blocage, commandés sélectivement, aptes à permettre un déplacement relatif avec blocage dans l'une des deux positions extrêmes des rouleaux de renvoi (8, 9) par rapport aux axes (3a, 4a) des rouleaux principaux (3, 4), les rouleaux de renvoi (8, 9) se trouvant soit dans la localisation finale opérationnelle, soit dans une localisation initiale temporaire de mise en place où ils sont associés aux rouleaux principaux (3, 4) respectivement au plus à proximité de l'ouverture d'entrée (6) et de l'ouverture de sortie (7).

23. Chariot selon la revendication 22, caractérisé en ce que les rouleaux principaux (3, 4) font partie d'un système d'étirage longitudinal du film, le dit système comprenant, en outre des moyens (11) aptes à permettre le pivotement, simultanément, du rouleau principal aval (4) avec une vitesse périphérique plus grande que la vitesse périphérique du rouleau principal amont (3).

24. Chariot selon la revendication 22, caractérisé en ce que les moyens (25) pour le déplacement comportent deux paires de biellettes (30) supportent à l'une de leurs extrémités (29) les axes (8a, 9a) des rouleaux de renvoi (8, 9), ces biellettes (30) étant à leur autre extrémité (31) portées par le bâti (10), de façon à pouvoir pivoter coaxialement ou perallèlement aux axes des rouleaux principaux (3, 4) ; des galets, engrenages, poulies ou équivalent (33, 34) étant montés celés sur les axes de pivotement (3a, 4a) des biellettes (30) assurant l'entraînement sélectif et le blocage des galets, engrenages, poulies ou équivalents (33, 34).

25. Chariot selon la revendication 22,caractérisé en ce que les moyens (25) pour le déplacement comportent un cadre (38) monté pivotent sensiblement au centre (23) du passage (5) entre les rouleaux principaux (3, 4), le dit cadre (38) supportent à ses deux extrémités opposées (39, 40) les axes (8a, 9a) des rouleaux de renvoi (8, 9), un organe moteur (27) assurant l'entraînement sélectif et le blocage du cadre (38).

26. Chariot selon la revendication 22, caractérisé en ce que les moyens (25) pour le déplacement comportent deux couronnes ou paires de couronnes (40) supportent fixement et distinctement les axes (8a, 9a) des rouleaux de renvoi (8, 9), ces couronnes étant portées et guidées par des galets (41), un organe moteur (27) assurant l'entraînement sélectif et le blocage des couronnes (40).

27. Chariot selon la revendication 22, caractérisé en ce que l'arbre support (42) est maintenu par une de ses deux parties extrêmes (45) sur le bâti (10) ; et comporte, à sa partie extrême libre opposée (47), un dispositif automatique (48) de blocage de la bobine de film (15), dont la partie extrême libre (49) forme commande.

28. Chariot selon la revendication 22, caractérisé en ce que l'arbre suppport (42) comporte une chemise (50) de guidage rigidement fixée perpendiculairement au bâti (10) ; une tige (51) montée à coulissement axial dans la chemise (50) et saillant de son extrémité (52) opposée au bâti (10) ; des organes de guidage radial (53) de manière à pouvoir être déplacés radielement entre deux positions extrêmes respectivement le plus proche de la tige (51) et le plus éloigné, ces deux positions correspondant aux états respectivement inactif et actif d'un dispositif de blocege (48) de la bobine de film (15) ; et un organe d'entraînement (55) associé à le tige (51) et agissant sur les organes de blocage (54) de manière à permettre, par coulissement axial de la tige (51), de réaliser le déplacement radial des organes de blocage (54).

29. Chariot selon la revendication 22, caractérisé en ce qu'il comprend des moyens (69) aptes à restreindre la laize de la bande de film (1) constitués par une fente (70) d'un organe de plissage (71) sur lequel glisse la bande de film (1), la direction longitudinale de la fente (70) étant inclinée, avec un angle aigu par rapport à l'axe de la bobine de film.

30. Chariot selon la revendication 29, caractérisé en ce que l'organe de plissage (71) est constitué par deux tiges ou rouleaux fixes (75, 77) parallèles et écartés transversalement l'un de l'autre, espacés pour constituer la fente (70), portés par un cadre support (78).

31. Chariot selon la revendication 22, caractérisé en ce qu'il comporte deux crochets (85, 86) ou équivalents situés en amont d'un dispositif à rouleau de pré-étirage (2), situés dans un plan transversal par rapport à celui de la bande de film (1), sur lesquels glissent les bords longitudinaux (83, 84) de la bande de film (1) de manière à réaliser sur ceux-ci deux plis longitudinaux (81, 82) en vue d'éviter le déchirement de la bande de film (1).

## Claims

1. A method of operating a carriage for unreeling packaging film comprising a frame, a film roll supporting shaft, to allow pivoting of the reel and unreeling of the film; a device having rollers the spindles of which are parallel with that of the supporting shaft, said carriage being intended to be incorporated into a packaging machine;
- an original phase for associating a reel with this supporting shaft;
- an subsequent phase involving positioning of the strip of film in the roller device (2) comprising two main upstream and downstream rollers (3, 4) defining between them a passage (5) having an inlet aperture (6) and an outlet orifice (7), adapted to pivot about their spindles (3a, 4a) in opposite directions and two upstream and downstream return rollers (8, 9) having spindles (8a, 9a) parallel with the spindles (3a, 4a) of the main rollers, being in their operational location respectively separated upstream of the inlet aperture (6) and downstream of the outlet orifice (7);
- a phase entailing unreeling of film for packaging the load, characterised in that in the film strip positioning phase:
the starting point is an initial state in which the upstream and downstream return rollers (8, 9) are displaced in relation to their final operating location to a temporary initial location for positioning purposes in which they are respectively close to the inlet aperture (6) and outlet orifice (7);
in an initial introduction phase, an initial end (19) of the film (1) is introduced between the upstream main roller (3) and return roller (8) and in the direction of the main downstream roller (4);
in a subsequent passage phase, the main upstream and downstream rollers (3, 4) are caused to pivot about their spindles (3a, 4a) and a certain length of film (1) is caused to pass in the direction in which it is introduced into the device (2) in such a way that the film passes between the downstream main rollers and return rollers;
. and in a final positioning phase, there is a relative displacement which brings the upstream and downstream return rollers (8, 9) from their initial location to their final operating location, the effect of which is to curve the film (1) by applying it onto the main upstream and downstream rollers (3, 4).

2. A method according to claim 1, characterised in that the return rollers (8, 9) are left permanently to pivot freely about their spindles (8a, 9a).

3. A method according to claim 1, characterised in that during the passage phase, the main rollers (3, 4) are so driven that they pivot positively about their spindles (3a, 4a).

4. A method according to claim 1, characterised in that in the initial location, the return rollers (8, 9) are moved into the inlet and outlet apertures (6, 7).

5. A method according to claim 1, characterised in that in the initial location, the return rollers (8, 9) are moved transversely away from the main rollers (3, 4) by a distance which is the order of the thickness of the film (1).

6. A method according to claim 1, characterised in that during the introduction phase, the main rollers (3, 4) are caused to pivot positively.

7. A method according to claim 1, characterised in that during the passage phase, a length of film 1 is caused to pass which is at least equal to that of the travel of the film in the roller device (2).

8. A method according to claim 1, characterised in that during the passage phase, the main rollers (3, 4) are caused to pivot about their spindles (3a, 4a) by at least approximately one revolution.

9. A method according to claim 1, characterised in that the initial end (19) of the film (1) is gripper downstream of the passage between the downstream main roller (4) and the downstream return roller (9) as soon as the downstream return roller (9) is in its initial location and by exerting a traction force on it it is pulled into the direction of its travel.

10. A method according to claim 1, characterised in that a certain retaining tension is exerted on the film (1) on the upstream side in the direction opposite to that of its travel.

11. A method according to claim 1, characterised in that in the positioning phase there is simultaneously a relative displacement of the upstream and downstream main rollers (3, 4) and return rollers (8, 9).

12. A method according to claim 1, characterised in that in the positioning phase there is a relative displacement of the upstream and downstream return rollers (8, 9) and of the upstream and downstream main rollers (3, 4) while the return rollers (8, 9) are maintained in proximity of the upstream and downstream main rollers (3, 4) reciprocally.

13. A method according to claim 1, characterised in that in the operating position, the upstream and downstream return rollers (8, 9) are brought substantially against the main upstream and downstream rollers (3, 4), the film (1) being interposed between them.

14. A method according to claim 1, characterised in that the upstream and downstream main rollers (3, 4) are positioned with a transverse spacing between them which is substantially equal to the minimum distance which allows the film (1) to pass.

15. A method according to claim 1, characterised in that in the positioning phase, the spindles (3a, 4a) of the main rollers (3, 4) are maintained fixed while the spindles (8a, 9a) of the return rollers (8, 9) are displaced.

16. A method according to claim 1, characterised in that in the positioning phase, the spindles (8a, 9a) of the return rollers (8, 9) are maintained fixed while the spindles (3a, 4a) of the main rollers (3, 4) are displaced.

17. A method according to claim 1, characterised in that in the positioning phase both the spindles (3a, 4a, 8a, 9a) of the main rollers and of the return rollers (8, 9) are displaced.

18. A method according to claim 1, characterised in that the main rollers (3, 4) are positively entrained by the travel of the film (1) itself and the film (1) is acted upon in order that it may be directly and positively driven.

19. A method according to claim 1, characterised in that the main rollers (3, 4) are positively and directly driven and in that said rollers allow passage of the film (1).

20. A method according to claim 1, characterised in that the peripheral speed of the downstream roller (4) is greater than that of the main upstream roller (3), the pair of main rollers (3, 4) acting as a means of drawing out the film (1) while it is travelling.

21. A method according to claim 1, characterised in that in the phase involving association of a reel of film (15) with the supporting shaft (42): the starting point is an initial situation in which the supporting shaft provided at its free end with an automatic device (48) for locking a reel (15) in the inactive state is free and does not carry a reel (15); the reel (15) which is to be associated with the supporting shaft (42) is then placed in position and the supporting shaft (42) is generally coaxial with it but the two are spaced apart from each other along their common spindle; a relative displacement is performed in the axial direction of the supporting shaft (42) and the film reel (15) so that they co-operate with each other until such time as a suitable force exerted axially on the free end portion of the shaft forming a means (49) for operating the locking device (48) causes the locking device (48) to pass into an active condition and then the carriage is moved to its operating position by a single axial sliding movement.

22. A carriage for unreeling packaging film, comprising a frame, a shaft (42) for supporting a reel of film carried by the frame, a roller device carried by the frame and having spindles parallel with that of the supporting shaft, the said carriage being intended to be incorporated in a packaging machine, the roller device comprising two main upstream and downstream rollers (3, 4) which are separated transversely and which have spindles (3a, 4a) parallel with but close to one another, defining between them a passage (5) for the packaging film (1), having an inlet aperture (6) and an outlet orifice (7), the said main rollers (3, 4) being disposed to pivot simultaneously about their spindles (3a, 4) in opposite directions thanks to drive means (11); two upstream and downstream return rollers (8, 9) for the film (1), associated with the main upstream and downstream rollers (3, 4) of which the spindles (8a, 9a) are parallel inter se and with the spindles (3a, 4a) of the main rollers, the said return rollers (8, 9) being in their final operating position respectively moved apart upstream of the inlet aperture (6) and downstream of the outlet orifice (7), characterised in that it comprises, carried by the frame (10), means (25) for selectively operated displacement and locking and adapted to allow a relative displacement with locking in one of the two extreme positions of the return rollers (8, 9) in relation to the spindles (3a, 4) of the main rollers (3, 4), the return rollers (8, 9) being either in the final operating location or in a temporary initial and positioning location in which they are associated with the main rollers (3, 4) respectively at most in proximity of the inlet aperture (6) and outlet orifice (7).

23. A carriage according to claim 22, characterised in that the main rollers (3, 4) form part of a system for longitudinal drawing out of the film, the said system comprising also means (11) adapted to allow simultaneous pivoting of the main upstream roller (4) at a peripheral speed which is greater than the peripheral speed of the main downstream roller (3).

24. A carriage according to claim 22, characterised in that the displacement means (25) comprise two pairs of connecting rods (30) supporting at one of their ends (29) the spindles (8a, 9a) of the return rollers (8, 9), said connecting rods (30) being at their other end (31) carried by the frame (10) so that they can pivot coaxially with or parallel with the spindles of the main rollers (3, 4); rollers, gears, pulleys or the like (33, 34) being keyed on the pivot spindles (3a, 4a) of the connecting rods (30) to ensure selective driving and locking of the rollers, gears, pulleys or the like (33, 34).

25. A carriage according to claim 22, characterised in that the displacement means (25) comprise a frame (38) pivotally mounted substantially in the centre (23) of the passage (5) between the main rollers (3, 4), the said frame (38) supporting at its two opposite ends (39, 40) the spindles (8a, 9a) of the return rollers (8, 9), a motor means (27) providing for selective driving and locking of the frame (38).

26. A carriage according to claim 22, characterised in that the displacement means (25) comprise two rings or pairs of rings (40) rigidly and separately supporting the spindles (8a, 9a) of the return rollers (8, 9), said rings being carried and guided by rollers (41), motor means (29) ensuring selective driving and locking of the rings (40).

27. A carriage according to claim 22, characterised in that the supporting shaft (42) is held on the frame (10) by one of its two end parts (45) and comprises at its opposite free end part (47) an automatic device (48) for locking the film reel (15), of which the free end part (49) serves as an operating medium.

28. A carriage according to claim 22, characterised in that the supporting shaft (42) comprises a guide liner (50) rigidly mounted at right-angles to the frame (10) and a rod (21) mounted to slide axially in the liner (50) and projecting from its end (52) opposite the frame (10), radial guide means (53) adapted to be displaced radially between two extreme positions which are respectively closest to and farthest from the rod (51), the said two positions corresponding to the respectively active and inactive conditions of a device (48) for locking the film reel (15), and drive means (55) associated with the rod (51) and acting on the locking members (54) in order, by axial sliding of the lock of the rod (51), to allow radial displacement of the locking means (54).

29. A carriage according to claim 22, characterised in that it comprises means (69) adapted to restrict the width of the strip of film (1), said means being constituted by a slot (70) in a folding means (71) over which the strip of film (1) slides, the longitudinal direction of the slot (70) being inclined at an acute angle to the axis of the film reel.

30. A carriage according to claim 29, characterised in that the folding means (71) consist of two fixed rods or rollers (75, 77) which are parallel and separated transversely from each other, being spaced apart to constitute the slot (70), carried by a supporting frame (78).

31. A carriage according to claim 22, characterised in that it comprises two hooks (85, 86) or the like situated upstream of a pre-drawing roller device (2), situated in a transverse plane in relation to that of the strip of film (1) over which slide the longitudinal edges (83, 84) of the strip of film (1) in order to make on these latter two longitudinal folds (81, 82) to avoid the strip of film (1) tearing.

## Patentansprüche

1. Verfahren unter Verwendung eines Wagens zum Abwickeln einer Verpackungsfolie, welcher aufweist: ein Gestell; eine Trägerwelle für eine Folienspule, um das Drehen der Spule und das Abwickeln der Folie zu ermöglichen; eine Vorrichtung mit Walzen, deren Achsen parallel zu derjenigen der Trägerwelle sind; wobei dieser Wagen zum Einbau in eine Verpackungseinrichtung vorgesehen ist; umfassend
- einen anfänglichen Schritt des Anbringens einer Spule an der Trägerwelle;
- einen darauffolgenden Schritt des Einfädelns der Follenbahn in die Walzenvorrichtung (2), welche eine in Durchlaufrichtung vordere Hauptwalze (3) und eine in Durchlaufrichtung hintere Hauptwalze (4) aufweist, die zwischen sich einen Durchgang (5) mit einer Eintrittsöffnung (6) und einer Austrittsöffnung (7) begrenzen und dazu ausgelegt sind, sich gegenläufig um ihre Achsen (3a, 4a) zu drehen, und eine in Durchlaufrichtung vordere Umlenkwalze (8) und eine in Durchlaufrichtung hintere Umlenkwalze (9), deren Achsen (8a, 9a) parallel zu den Achsen (3a, 4a) der Hauptrollen sind und die sich in ihrer jeweiligen Arbeitsstellung vor der Eintrittsöffnung (6) bzw. hinter der Austrittsöffnung (7) befinden;
- einen Schritt des Abwickelns der Folie zum Verpacken der Ladung,
dadurch gekennzeichnet, daß bei dem Schritt des Einfädelns der Folienbahn:
· von einem Anfangszustand ausgegangen wird, in dem die vordere Umlenkwalze (8) und die hintere Umlenkwalze (9) relativ zu ihrer letztendlichen Arbeitsstellung in eine vorübergehende anfängliche Einfädelstellung bewegt sind, in der sie sich in der Nähe der Eintrittsöffnung (6) bzw. der Austrittsöffnung (7) befinden;
· in einem anfänglichen Einführungsschritt ein Kopfende (19) der Folie (1) zwischen die vordere Hauptwalze (3) und die vordere Umlenkwalze (8) und in Richtung auf die hintere Hauptwalze (4) hin eingeführt wird;
· in einem darauffolgenden Durchlaufschritt die vordere Hauptwalze (3) und die hintere Hauptwalze (4) um ihre Achsen (3a, 4a) gedreht werden und man eine bestimmte Länge der Folie (1) in der Richtung ihrer Einführung durch die Vorrichtung (2) laufen läßt, so daß die Folie zwischen der hinteren Hauptwalze und der hinteren Umlenkwalze hindurchläuft;
· und in einem abschließenden Verstellschritt die vordere Umlenkwalze (8) und die hintere Umlenkwalze (9) jeweils aus ihrer Anfangsstellung in ihre letztendliche Arbeitsstellung gebracht werden, mit dem Ergebnis, daß die Folie (1) durch Auflage auf der vorderen Hauptwalze (8) und der hinteren Hauptwalze (9) gekrümmt wird.

2. Verfahren nach Anspruch 1, dadurch gekennzeichnet, daß die Umlenkwalzen (8, 9) permanent in freier Drehung um ihre jeweilige Achse (8a, 9a) gelassen werden.

3. Verfahren nach Anspruch 1, dadurch gekennzeichnet, daß die Hauptwalzen (3, 4) während des Durchlaufschrittes um ihre jeweilige Achse (3a, 4a) drehend angetrieben werden.

4. Verfahren nach Anspruch 1, dadurch gekennzeichnet, daß die Umlenkwalzen (8, 9) in der Anfangsstellung in die Eintrittsöffnung (6) bzw. in die Austrittsöffnung (7) gebracht werden.

5. Verfahren nach Anspruch 1, dadurch gekennzeichnet, daß die Umlenkwalzen (8, 9) in die Anfangsstellung gebracht werden, während sie von den Hauptwalzen (3, 4) in Querrichtung um eine Distanz beabstandet sind, die in der Größenordnung der Dicke der Folie (1) liegt.

6. Verfahren nach Anspruch 1, dadurch gekennzeichnet, daß die Hauptwalzen (3, 4) während des Einführungsschrittes drehend angetrieben werden.

7. Verfahren nach Anspruch 1, dadurch gekennzeichnet, daß man während des Durchlaufschrittes eine Länge Folie (1) durchlaufen läßt, die mindestens so lang ist wie der Weg der Folie in der Walzenvorrichtung (2).

8. Vorrichtung nach Anspruch 1, dadurch gekennzeichnet, daß die Hauptwalzen (3, 4) während des Durchlaufschrittes mindestens über eine Umdrehung um ihre jeweilige Achse (3a, 4a) gedreht werden.

9. Verfahren nach Anspruch 1, dadurch gekennzeichnet, daß das Kopfende (19) der Folie (1) hinter dem Durchgang zwischen der hinteren Hauptwalze (4) und der hinteren Umlenkwalze (9) ergriffen wird, sobald sich die hintere Umlenkwalze (9) in ihrer Anfangsstellung befindet, und durch Ausüben einer Zugkraft in der Richtung ihres Durchlaufens gezogen wird.

10. Verfahren nach Anspruch 1, dadurch gekennzeichnet, daß in Durchlaufrichtung vorne eine gewisse Rückhaltespannung auf die Folie (1) entgegengesetzt zu ihrer Durchlaufrichtung ausgeübt wird.

11. Verfahren nach Anspruch 1, dadurch gekennzeichnet, daß während des Verstellschrittes eine relative Bewegung der vorderen und hinteren Hauptwalzen (3, 4) und Umlenkwalzen (8, 9) gleichzeitig durchgeführt wird.

12. Verfahren nach Anspruch 1, dadurch gekennzeichnet, daß während des Verstellschrittes eine relative Bewegung der vorderen und hinteren Hauptwalzen (3, 4) und Umlenkwalzen (8, 9) durchgeführt wird, indem die Umlenkwalzen (8, 9) in der Nähe der vorderen bzw. der hinteren Hauptwalze (3, 4) gehalten werden, und umgekehrt.

13. Verfahren nach Anspruch 1, dadurch gekennzeichnet, daß die vordere und die hintere Umlenkwalze (8, 9) im wesentlichen gegen die vordere bzw. die hintere Hauptwalze (3, 4) in die Arbeitsstellung geführt werden, wobei die Folie (1) zwischen ihnen eingelegt ist.

14. Verfahren nach Anspruch 1, dadurch gekennzeichnet, daß die vordere und die hintere Hauptwalze (3, 4) mit einem Abstand in Querrichtung angeordnet werden, der im wesentlichen gleich dem Mindestabstand ist, bei dem das Durchlaufen der Folie (1) zwischen ihnen möglich ist.

15. Verfahren nach Anspruch 1, dadurch gekennzeichnet, daß während des Verstellschrittes die Achsen (3a, 4a) der Hauptwalzen (3, 4) fest gehalten und die Achsen (8a, 9a) der Umlenkwalzen (8, 9) bewegt werden.

16. Verfahren nach Anspruch 1, dadurch gekennzeichnet, daß während des Verstellschrittes die Achsen (8a, 9a) der Umlenkwalzen (8, 9) fest gehalten und die Achsen (3a, 4a) der Hauptwalzen (3, 4) bewegt werden.

17. Verfahren nach Anspruch 1, dadurch gekennzeichnet, daß während des Verstellschrittes die Achsen (3a, 4a, 8a, 9a) der Hauptwalzen und der Umlenkwalzen (8, 9) gleichzeitig bewegt werden.

18. Verfahren nach Anspruch 1, dadurch gekennzeichnet, daß die Hauptwalzen (3, 4) durch den Durchlauf der Folie (1) selbst angetrieben werden, und auf die Folie (1) eingewirkt wird, um sie direkt anzutreiben.

19. Verfahren nach Anspruch 1, dadurch gekennzeichnet, daß die Hauptwalzen (3, 4) direkt angetrieben werden und diese das Durchlaufen der Folie (1) ermöglichen.

20. Verfahren nach Anspruch 1, dadurch gekennzeichnet, daß die Umfangsgeschwindigkeit der hinteren Walze (4) höher als diejenige der vorderen Hauptwalze (3) ist, wobei das Paar von Hauptwalzen (3, 4) als Mittel zum Recken der Folie (1) während ihres Durchlaufs dient.

21. Verfahren nach Anspruch 1, dadurch gekennzeichnet, daß beim Schritt des Anbringens einer Folienspule (15) an der Trägerwelle (42) von einer Anfangsstellung ausgegangen wird, in der die Trägerwelle, die an ihrem freien Endabschnitt mit einer automatischen Blockiervorrichtung (48) für eine Spule (15) versehen ist, im inaktiven Zustand frei und nicht mit einer Spule (15) versehen ist; sodann die an der Trägerwelle (42) anzubringende Spule (15) und die Trägerwelle (42) koaxial, aber entlang ihrer gemeinsamen Achse voneinander entfernt angeordnet werden; dann eine relative Bewegung in axialer Richtung der Trägerwelle (42) und der Folienspule (15) durchgeführt wird, damit sie miteinander zusammenwirken, bis eine geeignete, axial auf den freien Endabschnitt der Welle, die eine Betätigung (49) der Blockiervorrichtung (48) bildet, ausgeübte Kraft den Übergang der Blockiervorrichtung (48) in den aktiven Zustand hervorruft; und dann der Wagen durch eine einmalige axiale Verschiebungsbewegung in seine Arbeitsstellung gebracht wird.

22. Wagen zum Abwickeln von Verpackungsfolie, welcher aufweist: ein Gestell; eine von dem Gestell getragene Trägerwelle (42) für eine Folienspule; eine von dem Gestell getragene Vorrichtung mit Walzen, deren Achsen parallel zu derjenigen der Trägerwelle sind; wobei dieser Wagen zum Einbau in eine Verpackungseinrichtung vorgesehen ist; wobei die Walzenvorrichtung eine vordere Hauptwalze (3) und eine hintere Hauptwalze (4) aufweist, welche in Querrichtung beabstandet sind und deren Achsen (3a, 4a) parallel sind, die aber in gegenseitiger Nähe angeordnet sind, so daß sie zwischen sich einen Durchgang (5) für die Verpackungsfolie mit einer Eintrittsöffnung (6) und einer Austrittsöffnung (7) begrenzen, und die Hauptwalzen (3, 4) derart ausgelegt sind, daß sie aufgrund von Antriebsmitteln (11) gleichzeitig und gegenläufig um ihre Achsen (3a, 3b) drehen; eine vordere Walze (8) und eine hintere Walze (9) zum Umlenken der-Folie (1), welche der vorderen Hauptwalze (3) bzw. der hinteren Hauptwalze (4) zugeordnet sind und deren Achsen (8a, 9a) untereinander und zu den Achsen der Hauptwalzen (3a, 4a) parallel sind, wobei die Umlenkwalzen (8, 9) sich in ihrer letztendlichen Arbeitsstellung vor der Eintrittsöffnung (6) bzw. hinter der Austrittsöffnung (7) befinden, dadurch gekennzeichnet, daß er von dem Gestell (10) getragene Bewegungsmittel (25) mit Blockierung aufweist, welche selektiv gesteuert und geeignet sind, eine relative Bewegung mit Blockierung in eine der beiden Endstellungen der Umlenkwalzen (8, 9) im Verhältnis zu den Achsen (3a, 4a) der Hauptwalzen (3, 4) durchzuführen, wobei die Umlenkwalzen (8, 9) sich entweder in der letztendlichen Arbeitsstellung oder in einer vorübergehenden anfänglichen Einfädelstellung befinden, in der sie den Hauptwalzen (3, 4) zugeordnet bzw. in nächster Nähe der Eintrittsöffnung (6) bzw. der Austrittsöffnung (7) angeordnet sind.

23. Wagen nach Anspruch 22, dadurch gekennzeichnet, daß die Hauptwalzen (3, 4) Teil eines Systems zum Recken der Folie in Längsrichtung bilden, wobei das System des weiteren Mittel (11) aufweist, welche geeignet sind, die gleichzeitige Drehung der hinteren Hauptwalze (4) mit einer höheren Umfangsgeschwindigkeit als der Umfangsgeschwindigkeit der vorderen Hauptwalze (3) zu ermöglichen.

24. Wagen nach Anspruch 22, dadurch gekennzeichnet, daß die Bewegungsmittel (25) aufweisen: zwei Paare von Schwingarmen (30), welche jeweils an einem ihrer Enden (29) die Achse (8a, 9a) einer Umlenkwalze (8, 9) tragen, wobei die Schwingarme (30) an ihrem anderen Ende (31) von dem Gestell (10) getragen sind, so daß sie koaxial mit oder parallel zu den Achsen der Hauptwalzen (3, 4) schwenken können; Rollen, Getriebe, Kettenräder oder dergleichen (33, 34), welche fest auf den Schwenkachsen (3a, 4a) der Schwingarme (30) sitzend den selektiven Antrieb oder die Blockierung der Rollen, Getriebe, Kettenräder oder dergleichen (33, 34) gewährleisten.

25. Wagen nach Anspruch 22, dadurch gekennzeichnet, daß die Bewegungsmittel (25) einen in etwa in der Mitte des Durchgangs (5) zwischen den Hauptwalzen (3, 4) schwenkbar angebrachten Rahmen (38) aufweisen, wobei der Rahmen (38) an seinen beiden gegenüberliegenden Enden (39, 40) die Achsen (8a, 9a) der Umlenkwalzen (8, 9) trägt, wobei ein Antriebselement (27) den selektiven Antrieb und die Blockierung des Rahmens (38) gewährleistet.

26. Wagen nach Anspruch 22, dadurch gekennzeichnet, daß die Bewegungsmittel (25) zwei Kränze oder Paare von Kränzen (40) aufweisen, welche die Achsen (8a, 9a) der Umlenkwalzen (8, 9) fest und separat halten, wobei die Kränze von Rollen (41) getragen und geführt sind und ein Antriebselement (27) den selektiven Antrieb und die Blockierung der Kränze (40) gewährleistet.

27. Wagen nach Anspruch 22, dadurch gekennzeichnet, daß die Trägerwelle (42) an einem ihrer beiden Endabschnitte (45) an dem Rahmen (10) gehalten wird; und an ihrem gegenüberliegenden freien Ende (47) eine automatische Vorrichtung (48) zur Blockierung der Folienspule (15) aufweist, deren freier Endabschnitt (49) die Betätigung bildet.

28. Wagen nach Anspruch 22, dadurch gekennzeichnet, daß die Trägerwelle (42) aufweist: eine senkrecht am Gestell (10) starr befestigte Führungsröhre (50); einen in der Röhre (50) axial verschiebbaren und mit seinem dem Gestell (10) gegenüberliegenden Ende (52) vorstehenden Schaft (51); radiale Führungselemente (53), so daß sie zwischen zwei Endstellungen radial bewegt werden können, die dem Schaft (51) zunächst bzw. zufernst liegen, wobei diese beiden Stellungen dem inaktiven bzw. dem aktiven Zustand einer Blockiervorrichtung (48) für die Folienspule (15) entsprechen; und ein mit dem Schaft (51) verbundenes Antriebselement (55), welches so auf die Blockierelemente (54) einwirkt, daß es durch eine axiale Verschiebung des Schaftes (51) die radiale Bewegung der Blockierelemente (54) bewirkt.

29. Wagen nach Anspruch 22, dadurch gekennzeichnet, daß er Mittel (69) aufweist, welche geeignet sind, um die Bahnbreite der Folienbahn (1) zu verringern, und aus einem Schlitz (70) eines Faltelements (71) bestehen, auf dem die Folienbahn (1) gleitet, wobei die Längsrichtung des Schlitzes (70) zur Achse der Folienspule in einem spitzen Winkel geneigt ist.

30. Wagen nach Anspruch 29, dadurch gekennzeichnet, daß das Faltelement (71) aus zwei parallelen und in Querrichtung voneinander entfernten, feststehenden Stangen oder Walzen (75, 77) besteht, welche so beabstandet sind, daß sie den Schlitz (70) bilden, und von einem Tragrahmen (78) getragen sind.

31. Wagen nach Anspruch 22, dadurch gekennzeichnet, daß er zwei Haken (85, 86) oder dergleichen aufweist, welche in Durchlaufrichtung vor einer Vorreck-Walzenvorrichtung (2) angeordnet sind und in einer im Verhältnis zur Ebene der Folienbahn (1) quer verlaufenden Ebene angeordnet sind, auf welchen die Längskanten (83, 84) der Folienbahn (1) gleiten, so daß sie an diesen zwei Längsfaltungen (81, 82) hervorrufen, um das Reißen der Folienbahn (1) zu verhindern.
